# EUROPEAN PATENT SPECIFICATION

(11) **EP 4 638 993 B1**
(45) Date of publication and mention of the grant of the patent: **16.09.2026**
(21) Application number: 23817827.1
(22) Date of filing: 30.11.2023
(51) Int. Cl.: F16H 47/04, F16H 61/12, G07C 5/08

(54) **SYSTEM TO INCREASE LIFETIME OF A VEHICLE**
SYSTEM ZUR ERHÖHUNG DER LEBENSDAUER EINES FAHRZEUGS
SYSTÈME POUR AUGMENTER LA DURÉE DE VIE D'UN VÉHICULE

(30) Priority: 22.12.2022 GB 202219565
(43) Date of publication of application: 29.10.2025
(73) Proprietor: AGCO International GmbH, 8212 Neuhausen am Rheinfall (CH)
(72) Inventor: FLORIAN, Kattler, 87616 Marktoberdorf (DE); MAYER, Josef, 87616 Marktoberdorf (DE)
(74) Representative: AGCO Intellectual Property Department
(86) International application number: PCT/IB2023/062058
(87) International publication number: WO 2024/134323

(56) References cited:
- US-A1- 2017 024 939
- US-A1- 2018 211 454

## Description

### FIELD

The present invention relates generally to a system for increasing the lifetime of a component of a vehicle. Such systems may be used for predictive maintenance to recognize wear or overload of vehicle components and to suggest appropriate measures before the vehicle component fails due to wear or overload.

### BACKGROUND

Vehicle components of mobile work machines such as agricultural vehicles or construction vehicles are exposed to heavy loads having a negative influence on the lifetime of the components which may result in a failure of the component. Any vehicle component may be effected by the heavy loads. The vehicle component may be an external component as a tool, for example a front or a back loader, or an internal component, for example a combustion engine or a transmission.

EP 1990 229 A2, "Drive arrangement for vehicles with at least two drivable vehicle axles", published on November 11, 2008, discloses a drivetrain for a vehicle including a continuously variable transmission (CVT). The transmission is driven by an engine and converts the rotational speed and the torque of the engine. Depending on whether the vehicle shall be used for high load operation or transport operation with higher speeds the transmission may transmit high torque at low driving speeds or lower torque at higher driving speeds. Both, permanent operation of the vehicle under high load or under high driving speed can damage the transmission due to an unilateral operation of the vehicle. US2017/024939A discloses a system to monitor belt operation in a seeding machine and predict belt lifespan.

### BRIEF SUMMARY

It is an objective to detect excessive wear or overload of a vehicle component due to an unilateral operation of the vehicle and to improve the lifetime of the vehicle and its components by predicting possible failures of the vehicle components and to suggest preventive measures.

According to an aspect of the invention there is provided a system for optimizing lifetime of a vehicle including a control unit and a first vehicle. The first vehicle includes a first component, a sensor for determining at least one load value representing a load of the first component and a sensor for determining at least one speed value corresponding to the at least one load value representing a vehicle speed. The control unit is configured to determine a load-speed spectrum of the first vehicle. The load-speed spectrum comprises at least one frequency value representing an operating time of the first vehicle in respect of the at least one load value and the at least one speed value corresponding to the at least one load value. The control unit is further configured to determine a reference load-speed spectrum for the first vehicle comprising at least one reference frequency value, to compare the load-speed spectrum of the first vehicle with the reference load-speed spectrum, to detect at least one deviation of the load-speed spectrum of the first vehicle from the reference load-speed spectrum and to determine a measure for optimizing the lifetime of the first vehicle in respect of the at least one deviation.

The lifetime of the first vehicle may be optimized by determining a measure for optimizing the lifetime of the first component in respect of the at least one deviation.

The control unit may be part of the first vehicle as an on-board control unit or part of an external computer as an off-board control unit. The control unit may be configured to exchange signals with the first vehicle.

The sensor for determining at least one load value representing a load of the first component may be a sensor for directly measuring the load value (e. g. a torque sensor) or a sensor for indirectly measuring a substitute value for calculating the corresponding load value by the control unit (e. g. an optical sensor or pressure sensor).

The sensor for determining at least one speed value corresponding to the at least one load value representing a vehicle speed may be a speed sensor integrated in the drivetrain of the vehicle e. g. at an output shaft of the first component. The senor may be a receiver for receiving signals of a global navigation satellite system (GNSS) for calculating a vehicle speed by the control unit. The sensor for determining at least one load value and the sensor for determining at least one speed value may determine their values approximately at the same time so that a speed value corresponds each to a load value. I. e., the control unit can determine for each load value the speed value that was present when the load value was determined and based thereon define speed-load operating points. If the load values are represented by pressure values the control unit may define speed-pressure operating points.

The reference load-speed spectrum may represent a balanced operation of the vehicle and may be a predefined recommendation of the vehicle or component manufacturer. The reference load-speed spectrum may represent a recommendation defined by a vehicle operator. Alternatively, the reference load-speed spectrum may represent the current load-speed spectrum of another vehicle different to the first vehicle. The reference load-speed spectrum may be stored in a data source the control unit has access to, e. g. via a data network. The data source may be implemented offboard, e. g. on a computer server of the manufacturer, or onboard, e. g. on a memory integrated in the first vehicle.

The load-speed spectrum represents the operation of the vehicle in real life. Based on a comparison between the load-speed spectrum and the reference load-speed spectrum, the control unit can determine a number and a degree of deviations between both spectra and detect an unbalanced or unilateral operation of the first vehicle that may cause a failure of the first or any other component of the first vehicle.

The first component may be any component of the vehicle connected to the vehicle as an external tool or implement or integrated into the vehicle as an internal component. The first component may be an electric motor, a (combustion) engine or a transmission for example.

The transmission may comprise a continuously variable transmission (CVT), a hydraulic transmission, a mechanical (planetary) transmission or a combination thereof as for example a hydrostatic mechanical continuously variable power split transmission (hydrostatic mechanical CVPST). The transmission comprising a hydraulic transmission may include an adjustable hydraulic pump and at least one adjustable hydraulic motor to provide a CVT with a hydraulic continuously variable ratio.

The load value representing a load of the first component may be a torque value or a pressure value for example.

The at least one load value representing the load of the first component may be a force or torque value of the transmission, for example in case of a mechanical transmission. The at least one load value may be a pressure value of the transmission, for example in case of a hydraulic transmission.

The pressure value may be a pressure value of a hydraulic line connecting a hydraulic pump and a hydraulic motor of the hydraulic transmission. The pressure value of the hydraulic transmission may be a pressure value of a high pressure line of the hydraulic transmission. The hydraulic transmission may include two lines connecting the hydraulic motor and the hydraulic pump. One of both lines is used as high pressure line and the other as low pressure line. The high pressure line may change to a low pressure line and vice versa in respect of the driving direction and load condition of the vehicle.

The control unit may be configured to determine at least one frequency value of the first vehicle by counting the number of all load-speed operating points relevant for the at least one frequency value and dividing this number by the overall number of load-speed operating points. Further, the control unit may determine a reference frequency value in respect of the frequency value for the reference load-speed spectrum of the first vehicle. Then, the control unit may determine how (kind) and how much (amount) the at least one frequency value deviates from the reference frequency value.

The control unit may be configured to determine a frequency centroid of the at least one frequency value of the load-speed spectrum of the first vehicle based on the arithmetic mean of all speed values and load values of the at least one frequency value and to determine a reference centroid of the at least one reference frequency value of the reference load-speed spectrum for the first vehicle.

Thus, the control unit may determine how (kind) and how much (amount) the arithmetic mean of all speed values of the corresponding frequency value deviates from the reference centroid (centroid v-distance) and how much the arithmetic mean of all load values of the corresponding frequency value deviates from the reference centroid (centroid p-distance).

So, a comparison of the load-speed spectrum of the first vehicle with the reference load-speed spectrum for the first vehicle may indicate whether the operation time of the first vehicle deviates from a recommended value (based on the comparison of the frequency value and the frequency reference value) and whether the first vehicle operated too fast (or too slow) and whether the first vehicle operated under too much load (or too less load) (based on the comparison of the frequency centroid and the reference centroid).

The control unit may be configured to detect a single critical deviation of the load-speed spectrum of the first vehicle from the reference load-speed spectrum if the at least one frequency value of the load-speed spectrum deviates from a tolerance range of the at least one reference frequency value of the reference load-speed spectrum or if the frequency centroid of the at least one frequency value of the load-speed spectrum deviates from a tolerance range of the reference centroid of the at least one reference frequency value of the reference load-speed spectrum. The control unit may also be configured to detect a double critical deviation of the load-speed spectrum of the first vehicle from the reference load-speed spectrum if the at least one frequency value of the load-speed spectrum deviates from a tolerance range of the at least one reference frequency value of the reference load-speed spectrum and if the frequency centroid of the at least one frequency value of the load-speed spectrum deviates from a tolerance range of the reference centroid of the at least one reference frequency value of the reference load-speed spectrum.

A deviation of a frequency value may be critical if the combination of the kind and the amount of the deviation of a frequency value from the reference frequency value differs from a defined tolerance range. Analogously, a deviation of a frequency centroid may be critical if the combination of the kind and the amount of the deviation of a frequency centroid from the reference centroid differs from a defined tolerance range. The tolerance ranges may be predefined by a manufacturer of the first vehicle or the component of first vehicle. The control unit may receive the tolerance range from an entity connected with the data network. The tolerance ranges may be adjusted by an operator and saved to a memory of one of the control units.

Next to the single and double critical deviations, the control unit may determine an uncritical deviation of a frequency value if the combination of the kind and the amount of the deviation does not differ from a defined tolerance range. Analogously, the control unit may determine an uncritical deviation of a frequency centroid if the combination of the kind and the amount of the deviation does not differ from a defined tolerance range. An uncritical deviation may also be determined if no deviation is present.

The control unit may be configured to determine a load-speed spectrum of the first vehicle comprising a first frequency value representing an operation time of the first vehicle for high speed operation and a second frequency value representing an operation time of the first vehicle for high load operation, to determine a reference load-speed spectrum of the first vehicle comprising a first reference frequency value in respect of high speed operation and a second reference frequency value in respect of high load operation and to determine whether the at least one deviation of the load-speed spectrum of the first vehicle from the reference load-speed spectrum of the first vehicle is a deviation in respect of high speed operation resulting from a deviation from the tolerance range of the first reference frequency value in respect of high speed operation or a deviation in respect of high load operation resulting from a deviation from the tolerance range of the second reference frequency value in respect of high load operation or both.

The first frequency value may be determined based on a first set of speed and load values representing high speed operation and the second frequency value may be determined based on a second set of speed and load values representing high load operation. Analogously, a first frequency centroid may be determined based on the arithmetic mean of all speed values and load values of the first set of speed and load values representing high speed operation and a second frequency centroid may be determined based on the arithmetic mean of all speed values and load values of the second set of speed and load values representing high load operation.

The comparison of the load-speed spectrum with the reference load-speed spectrum may show any deviation from a reference frequency value or from a reference centroid separately for high speed operation and for high load operation. Thus, the control unit may determine whether a deviation of the load-speed spectrum of the first vehicle from the reference load-speed spectrum is a deviation of the load-speed spectrum in respect of high speed operation, a deviation of the load-speed spectrum in respect of high load operation or both.

The comparison of the load-speed spectrum with the reference load-speed spectrum may also show how (kind) and how much (amount) the first or the second frequency values deviate from its corresponding reference frequency value. The operation of the first vehicle may be unbalanced if one of the first or second frequency values is much greater or smaller than the corresponding reference frequency value. The control unit may determine unilateral high load operation of the first vehicle if the second frequency value is greater than the corresponding reference frequency value or unilateral high speed operation of the first vehicle if the first frequency value is greater than the corresponding reference frequency value.

The control unit may also determine how (kind) and how much (amount) the arithmetic mean of all speed values of the corresponding frequency value assigned to high load operation deviates from the reference centroid defined for high load operation (centroid v-distance) and how much the arithmetic mean of all load values of the corresponding frequency value assigned to high load operation deviates from the reference centroid defined for high load operation (centroid p-distance). Same applies to high speed operation. Hence, depending on the kind and the amount of an unbalanced, unilateral operation a different measure for optimizing the lifetime of the first vehicle may be appropriate to mitigate any failure of the vehicle component that may be caused by one of the unilateral operation.

The control unit may be configured to determine whether the critical deviation of the load-speed spectrum of the first vehicle from the reference load-speed spectrum of the first vehicle is a single or double critical deviation in respect of high speed operation, or a single or double critical deviation in respect of high load operation, or both.

In case of a double critical deviation in respect of high speed operation, both the first frequency value and the corresponding first frequency centroid deviate from tolerance ranges of the corresponding reference frequency value and reference centroid defined for high speed operation. In case of a double critical deviation in respect of high load operation, both the second frequency value and the corresponding second frequency centroid deviate from tolerance ranges of the corresponding reference frequency value and reference centroid defined for high load operation. Hence, depending on the criticality of a deviation in respect of high load operation or high speed operation a different measure for optimizing the lifetime of the first vehicle may be appropriate.

The measure for optimizing the lifetime of the first vehicle in case of a critical deviation in respect of high speed operation or high load operation is a measure to warn an operator of the first vehicle to exchange the vehicle by another vehicle, to use another implement in combination with the first vehicle, to use the first vehicle for another task or to schedule a service inspection for maintenance.

The measure to warn the operator of the first vehicle may be an optical or an acoustic warning. The warning may be displayed by the control unit on a screen in the vehicle as an onboard application or on a screen of an external computer as an offboard application. The control unit may determine the measure under consideration of the data source the control unit has access to. Optionally, several measures may be stored on a memory of the control unit so that the control unit may select one of the measures of the data source or of the memory. The memory may comprise a list of other vehicles that could be used instead of the first vehicle, a list of other implements or tools that could be used in combination with the first vehicle or a list of other tasks that could be executed by the first vehicle instead of the current task. The control unit may suggest a vehicle of the other vehicles or an implement of the other implements or a task of the other tasks and display the suggestion on the screen. The suggestion to use another vehicle may comprise a recommendation to buy a new vehicle whose reference load-speed spectrum is in accordance with the load-speed spectrum of the first vehicle. Optionally, the control unit may suggest to schedule a service inspection for maintenance.

The at least one speed value of the first frequency value representing an operation time of the first vehicle for high speed operation may be greater than 90% of an authorized top speed of the first vehicle. Thus, a field of operation representing high speed operation may be defined by a minimum speed threshold of at least 90% of the authorized top speed of the first vehicle.

The at least one load value of the second frequency value representing an operation time of the first vehicle for high load operation may be greater than 65% of a maximum allowed permanent load of the first vehicle. Thus, a field of operation representing high load operations may be defined by a minimum load threshold of at least 65% of the maximum allowed permanent load of the first vehicle.

The maximum allowed permanent load may correspond to the maximum allowed permanent pressure. When the control unit determines new speed and load values the control unit may compare these values with the minimum speed threshold and the minimum load threshold and assign these values to the fields of operation representing high speed or high load operations if the corresponding threshold is exceed.

The measure for optimizing the lifetime of the first vehicle may be a measure to increase the first frequency value of the load-speed spectrum representing an operation time of the first vehicle for high speed operation if the at least one deviation of the load-speed spectrum of the first vehicle from the reference load-speed spectrum is a double critical deviation in respect of high load operation and an uncritical deviation in respect of high speed operation, and/or to increase the second frequency value of the load-speed spectrum representing an operation time of the first vehicle for high load operation if the at least one deviation of the load-speed spectrum of the first vehicle from the reference load-speed spectrum is a double critical deviation in respect of high speed operation and an uncritical deviation in respect of high load operation.

I. e., for the case that the operation of the first vehicle is unbalanced due to unilateral high speed operation, the operation of the first vehicle may be counterbalanced by increasing the share of high load operation. Vice versa, for the case that the operation of the first vehicle is unbalanced due to unilateral high load operation, the operation of the first vehicle may be counterbalanced by increasing the share of high speed operation.

The measure to increase the first frequency value of the load-speed spectrum representing high speed operation may be a measure to increase on-road transport operations of the first vehicle and the measure to increase the second frequency value of the load-speed spectrum representing high load operation may be a measure to increase off-road pulling operations of the first vehicle.

Off-road pulling operations as for example pulling a plough over an agricultural field can increase the share of high load operation since operations in the agricultural field require very high operating forces at low speeds. On-road transport operations as for example driving on a street and pulling a trailer can increase the share of high speed operations since operations on the road require lower operating forces than operations in the agricultural field but allow higher driving speeds. The measure to increase off-road pulling operations or the measure to increase on-road transport operations may be displayed on the vehicle HMI or on the computer.

The reference load-speed spectrum of the first vehicle may be based on a load-speed spectrum of an additional vehicle.

Thus, the control unit may compare the load-speed spectrum of the first vehicle with the load-speed spectrum of the additional vehicle.

The system may comprise at least one additional vehicle each having a component being of the same type as the first component of the first vehicle. The control unit may be configured to determine a load-speed spectrum of the at least one additional vehicle comprising at least one frequency value representing an operating time of the at least one additional vehicle in respect of at least one load value and at least one speed value, to determine a reference load-speed spectrum for the at least one additional vehicle comprising at least one reference frequency value, to compare the load-speed spectrum of the at least one additional vehicle with the reference load-speed spectrum for the at least one additional vehicle, and to detect at least one deviation of the load-speed spectrum of the at least one additional vehicle from the reference load-speed spectrum of the at least one additional vehicle.

Thus, based on a comparison between the load-speed spectrum of one of the additional vehicles and the reference load-speed spectrum, the control unit may determine a number and a degree of deviations between both spectra and detect an unbalanced or unilateral operation of each of the additional vehicles analogously to the first vehicle. The control unit may be configured to exchange signals with the at least one additional vehicle and the first vehicle or any other entity.

The control unit may be configured to determine whether the at least one deviation of the load-speed spectrum of the at least one additional vehicle from the reference load-speed spectrum for the at least one additional vehicle is contrary to the at least one deviation of the load-speed spectrum of the first vehicle from the reference load-speed spectrum for the first vehicle. A deviation of one load-speed spectrum may be contrary to a deviation of another load-speed spectrum if a determined deviation of the one load-speed spectrum was determined as a single or double critical deviation and if a corresponding deviation of the another load-speed spectrum was determined as an uncritical deviation. The measure for optimizing the lifetime of the first vehicle may be a measure to warn an operator of the first vehicle to exchange the first vehicle by the at least one additional vehicle for which the at least one deviation of the load-speed spectrum from the reference load-speed spectrum being contrary to the at least one deviation of the load-speed spectrum of the first vehicle from the reference load-speed spectrum for the first vehicle was detected.

For example, if the operation of the first vehicle is unbalanced due to excessive high speed operation and if the operation of one of the additional vehicles is unbalanced due to inadequate high load operation, the operation of the first vehicle may be counterbalanced by employing the first vehicle for the operations the additional vehicle was used before. In addition, the operation of the additional vehicle may be counterbalanced by employing the additional vehicle for the operations the first vehicle was used before.

The control unit may be configured to determine for the at least one additional vehicle whether the at least one deviation of the load-speed spectrum of the at least one additional vehicle from the reference load-speed spectrum for the at least one additional vehicle is a deviation in respect of high speed operation or a deviation in respect of high load operation. A deviation of one load-speed spectrum may be contrary to a deviation of another load-speed spectrum if both, the at least one deviation of the load-speed spectrum of the first vehicle and the at least one deviation of the load-speed spectrum of the at least one additional vehicle are a deviation in respect of high speed operation or if both, the at least one deviation of the load-speed spectrum of the first vehicle and the at least one deviation of the load-speed spectrum of the at least one additional vehicle are a deviation in respect of high load operation.

The load-speed spectrum of the first vehicle as well as of the at least one additional vehicle may be stored in a memory of the control unit. The memory may also comprise the reference load-speed spectrum of the first vehicle and of the at least one additional vehicle.

For example, if the operation of the first vehicle is unbalanced due to an unilateral high speed operation and if the operation of one of the additional vehicles is unbalanced due to an unilateral high load operation, the operation of the first vehicle may be counterbalanced by employing the first vehicle for high load operations the additional vehicle was used before. In addition, the operation of the additional vehicle may be counterbalanced by employing the additional vehicle for high speed operations the first vehicle was used before.

The control unit may be configured to determine a number of the deviations of the load-speed spectrum of the at least one additional vehicle from the reference load-speed spectrum of the at least one additional vehicle being contrary to the at least one deviation of the load-speed spectrum of the first vehicle from the reference load-speed spectrum of the first vehicle and to determine a degree of the deviation for each deviation of the load-speed spectrum of the at least one additional vehicle from the reference load-speed spectrum of the at least one additional vehicle being contrary to the at least one deviation of the load-speed spectrum of the first vehicle from the reference load-speed spectrum of the first vehicle wherein the measure for optimizing the lifetime of the first vehicle is a measure to warn an operator of the first vehicle to exchange the first vehicle by the at least one additional vehicle for which the greatest number of the deviations or the greatest degree of the deviation was determined.

For the case that the control unit determined for more than one of the additional vehicles at least one deviation of the load-speed spectrum from the reference load-speed spectrum being contrary to the at least one deviation of the load-speed spectrum of the first component, the control unit may propose one of the additional vehicles depending on the characteristic of the deviation.

The reference load-speed spectrum of the first vehicle and the reference load-speed spectrum of the at least one additional vehicle may be the same.

Thus, the first vehicle and the at least one additional vehicle have the same basis to compare their corresponding load-speed spectrums.

The control unit may be configured to determine the types of the first vehicle and the least one additional vehicle and to exclude any additional vehicle of a type different than the type of the first vehicle from determining of the measure for optimizing the lifetime of the first component.

Since vehicles of different types may comprise each a component of the same type a deviation of the load-speed spectrum from the reference load-speed spectrum may be additionally influenced by the type of the vehicle. This influence can be ignored if the control unit excludes any additional vehicle of a type different than the type of the first vehicle from determining of the measure for optimizing the lifetime of the first vehicle.

The control unit may be configured to determine different reference load-speed spectrums in dependence of the season. Thus, the reference load-speed spectrum may be adapted to climatic conditions based on each season, e. g. to consider wet days in spring and hot temperatures in summer.

The control unit may be configured to determine different reference load-speed spectrums in dependence of the geographical position of the first vehicle. Thus, the reference load-speed spectrum may be adapted to local geological properties of the soils or the terrains such as topography or soil moisture.

Another aspect includes a method for optimizing lifetime of a vehicle, comprising the steps of determining at least one load value representing a load of the first component of a vehicle, determining at least one speed value corresponding to the at least one load value representing a vehicle speed, exchanging signals with the first vehicle, determining a load-speed spectrum of the first vehicle comprising at least one frequency value representing an operating time of the first vehicle in respect of the at least one load value and the at least one speed value corresponding to the at least one load value, determining a reference load-speed spectrum for the first vehicle comprising at least one frequency value, comparing the load-speed spectrum of the first vehicle with the reference load-speed spectrum of the first vehicle, detecting at least one deviation of the load-speed spectrum of the first vehicle from the reference load-speed spectrum of the first vehicle and determining a measure for optimizing the lifetime of the first vehicle in respect of the at least one deviation.

The method may comprise the steps of determining a first frequency value for a first set of speed and load values representing high speed operation, determining a second frequency value for a second set of speed and load values representing high load operation, detecting at least one deviation of the load-speed spectrum of the first vehicle from the reference load-speed spectrum of the first vehicle if the first frequency value or the second frequency value or both frequency values deviate from a tolerance range of corresponding frequency values of the reference load-speed spectrum of the first vehicle and distinguishing whether a deviation of the load-speed spectrum of the first vehicle from the reference load-speed spectrum of the first vehicle is a deviation of the load-speed spectrum in respect of high speed operation, a deviation of the load-speed spectrum in respect of high load operation or both.

The method may comprise the steps of determining a first frequency centroid based on the arithmetic mean of all speed values and load values of the first frequency value, determining a second frequency centroid based on the arithmetic mean of all speed values and load values of the second frequency value, detecting at least one deviation of the load-speed spectrum of the first vehicle from the reference load-speed spectrum of the first vehicle if the first frequency centroid or the second frequency centroid or both frequency centroids deviate from a tolerance range of corresponding frequency centroids of the reference load-speed spectrum and distinguishing whether a deviation of the load-speed spectrum of the first vehicle from the reference load-speed spectrum of the first vehicle is a deviation of the load-speed spectrum in respect of high speed operation, a deviation of the load-speed spectrum in respect of high load operation or both.

The method may comprise the steps of detecting a critical deviation of a frequency value if a combination of a kind and an amount of the deviation of the frequency value from the reference frequency value differs from a defined tolerance range and detecting a critical deviation of a frequency centroid if a combination of a kind and an amount of the deviation of the frequency centroid from the reference centroid differs from a defined tolerance range.

The method may comprise the steps of exchanging signals with the at least one additional vehicle, determining a load-speed spectrum of the at least one additional vehicle , comparing the load-speed spectrum of the at least one additional vehicle with the reference load-speed spectrum of the at least one additional vehicle and detecting at least one deviation of the load-speed spectrum of the at least one additional vehicle from the reference load-speed spectrum of the at least one additional vehicle.

The method may comprise the step of determining whether the at least one deviation of the load-speed spectrum of the at least one additional vehicle from the reference load-speed spectrum of the at least one additional vehicle is contrary to the at least one deviation of the load-speed spectrum of the first vehicle from the reference load-speed spectrum of the first vehicle wherein a deviation of the load-speed spectrum from the reference load-speed spectrum is contrary to another if the at least one deviation of the load-speed spectrum of the at least one additional vehicle from the reference load-speed spectrum of the at least one additional vehicle was determined as a critical deviation and if the at least one deviation of the load-speed spectrum of the first vehicle from the reference load-speed spectrum of the first vehicle was determined as an uncritical deviation or vice versa.

The method may comprise the step of determining whether the at least one deviation of the load-speed spectrum of the at least one additional vehicle from the reference load-speed spectrum of the at least one additional vehicle is a deviation in respect of high speed operation or in respect of high load operation.

The method may comprise the step of determining a number of the deviations of the load-speed spectrum of the at least one additional vehicle from the reference load-speed spectrum of the at least one additional vehicle being contrary to the at least one deviation of the load-speed spectrum of the first vehicle from the reference load-speed spectrum of the first vehicle or a degree of the deviation for each deviation of the load-speed spectrum of the at least one additional vehicle from the reference load-speed spectrum of the at least one additional vehicle being contrary to the at least one deviation of the load-speed spectrum of the first vehicle from the reference load-speed spectrum of the first vehicle.

The load-speed spectrum of the first vehicle and the load-speed spectrum of the at least one additional vehicle may be the same.

The method may comprise the steps of determining the types of the first vehicle and the least one additional vehicle and excluding any additional vehicle of a type different than the type of the first vehicle from the measure for optimizing the lifetime of the first vehicle.

The method for optimizing lifetime of a vehicle may be a computer-implemented method. The control unit may be configured to carry out one or more steps of the method for optimizing lifetime of a vehicle.

Within the scope of this application it should be understood that the various aspects, embodiments, examples and alternatives set out herein, and individual features thereof may be taken independently or in any possible and compatible combination. Where features are described with reference to a single aspect or embodiment, it should be understood that such features are applicable to all aspects and embodiments unless otherwise stated or where such features are incompatible.

### BRIEF DESCRIPTION OF THE DRAWINGS

Several aspects of the invention will now be described, by way of example only, with reference to the accompanying drawings, in which:
FIG. 1 illustrates a system for optimizing lifetime of a vehicle;
FIG. 2 illustrates a drivetrain of a vehicle;
FIG. 3 illustrates a simplified view of a control unit;
FIG. 4 illustrates a flowchart of a method for optimizing lifetime of a vehicle;
FIG. 5 illustrates a structure of a speed-pressure map;
FIG. 6 illustrates a load-speed spectrum for a vehicle based on a speed-pressure map;
FIG. 7 illustrates a reference load-speed spectrum;
FIG. 8 illustrates a load-speed spectrum for a vehicle based on a speed-pressure map including reference values;
FIG. 9 illustrates a load-speed spectrum for another vehicle based on a speed-pressure map including reference values.

### DETAILED DESCRIPTION

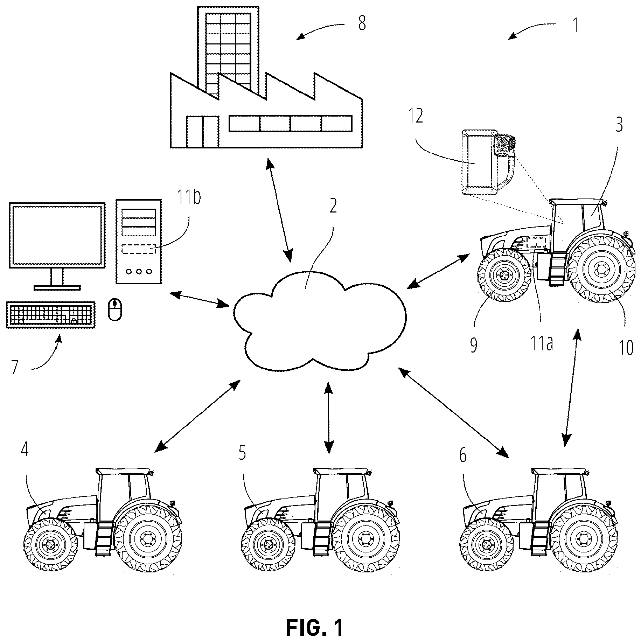

FIG. 1 shows a system 1 for optimizing lifetime of a vehicle comprising a data network 2 to which several entities are connected to for exchanging data from one entity to another entity. The entities are a first vehicle 3, a second vehicle 4, a third vehicle 5, a fourth vehicle 6, a computer 7 and an offboard data source 8 implemented in a computer server of a manufacturer of at least one of the first to fourth vehicles 3 to 6. The data network 2 can be implemented as a wireless data cloud to which all entities can be connected with or as a direct connection between two entities, e. g. via a data cable or radio.

The system 1 also comprises at least one control unit 11a, 11b. A control unit 11a is implemented onboard in the first vehicle 3, another control unit 11b is implemented offboard in the computer 7 being outside of the first vehicle 3. Additional control units are implemented in the other vehicles 4 to 6. Each control unit 11a, 11b is connected to the data network 2. Thus, the control unit of one entity can send data or signals to a control unit of any other entity connected with the data network 2 and receive data or signals from a control unit of any other entity connected with the data network 2.

The first vehicle 3 comprises a vehicle human machine interface 12, in the following vehicle HMI 12, for an operator to control the first vehicle 3. The vehicle HMI 12 is connected with the control unit 11a and comprises an output device as a display for displaying data, e. g. the data received by the control unit 11a, and an input device to control a function of the first vehicle 3, to configure the first vehicle 3 or to process the received data. Analogously to the first vehicle 3, the other vehicles 4 to 6 comprise each a control unit and a vehicle HMI.

The computer 7 also comprises a HMI for an operator. The HMI comprises an output device as a screen for displaying data, e. g. the data received by the control unit 11b, and an input device as a keyboard and a mouse to configure remotely one of the vehicles 3 to 6 or to process the received data.

The first vehicle 3 and the other vehicles 4 to 6 are agricultural vehicles such as a tractor, a harvester or a sprayer (without limitation to that types of vehicle), each including front wheels 9 and rear wheels 10.

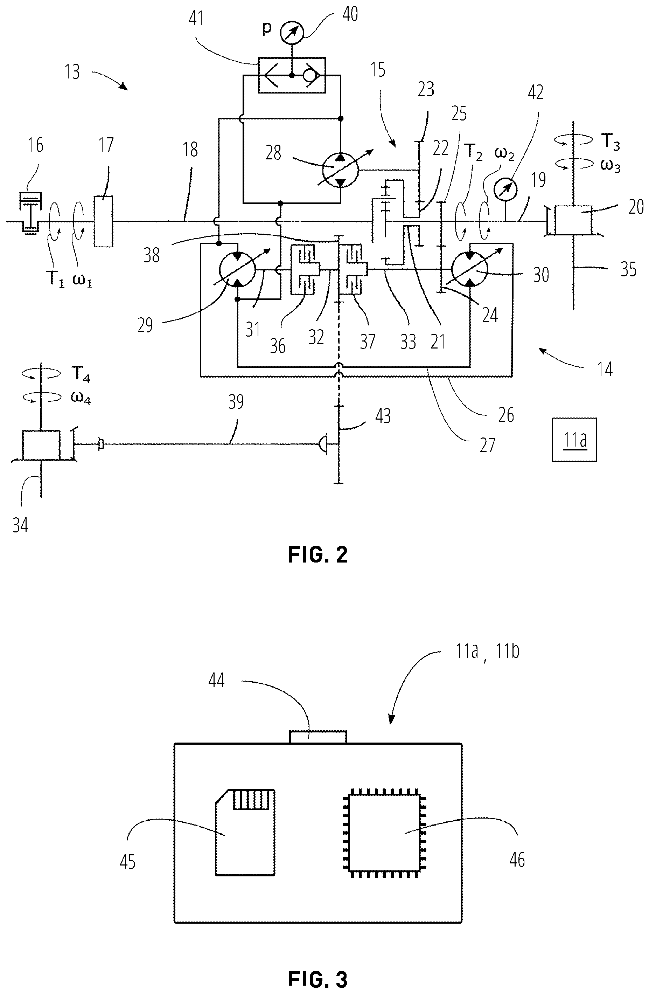

The first vehicle 3 and the other vehicles 4 to 6 comprise each a drivetrain 13 as for example shown in FIG. 2. The drivetrain 13 comprises several vehicle components as an engine 16, clutches 17, 36 and 37, a differential gear 20 and a transmission comprising a hydraulic transmission 14 and a planetary transmission 15 which are combined to a hydrostatic mechanical continuously variable power split transmission (hydrostatic mechanical CVPST). The hydraulic transmission 14 comprises an adjustable hydraulic pump 28 and two adjustable hydraulic motors 29 and 30. Such a drivetrain is disclosed and explained in patent application EP 1 990 229 A2, entitled "Drive arrangement for vehicles with at least two drivable vehicle axles", published on November 12, 2008, which is hereby incorporated by reference in its entirety.

As can be seen in FIG. 2, the hydraulic transmission 14 comprises hydraulic line 26 and hydraulic line 27 by which the adjustable hydraulic pump 28 and the two adjustable hydraulic motors 29 and 30 are connected with. During pull operations in forward direction (e. g. when the vehicle is pulling a trailer in forward direction) hydraulic line 26 is a high pressure line transferring hydraulic fluid outputted by the adjustable hydraulic pump 28 to the adjustable hydraulic motors 29 and 30. Hydraulic line 27 is a low pressure line transferring hydraulic fluid outputted by the adjustable hydraulic motors 29 and 30 back to the adjustable hydraulic pump 28. The same pressure conditions in the pressure hydraulic lines 26 and 27 are present during propulsion operation in reverse direction (e. g. when the vehicle is decelerated by the transmission and driving in reverse). But the pressure conditions in the pressure hydraulic lines 26 and 27 are vice versa during propulsion operation in forward direction (e. g. when the vehicle is decelerated by the transmission and driving forward) and during pull operations in reverse direction (when the vehicle is pulling in reverse direction). In these cases, hydraulic line 27 is a high pressure line and hydraulic line 26 is a low pressure line.

Further, the hydraulic transmission 14 as shown in FIG. 2 comprises a pressure sensor 40 which is connected via a shuttle valve 41 to the hydraulic lines 26 and 27 to determine the high pressure p produced by the adjustable hydraulic pump 28 or the adjustable hydraulic motors 29 and 30 independent of the driving status described above (pull operations in forward or in reverse direction respectively propulsion operation in forward or in reverse direction). The pressure sensor 40 transfers its measuring data wirelessly to the control unit 11a representing the load of the hydrostatic mechanical continuously variable power split transmission. The measuring data may be also transferred wirelessly to the control unit 11b. The pressure measured by the pressure sensor 40 represents a load value indicative for a load of the first component 14. Thus, the pressure sensor 40 determines a load value representing a load of the first component 14.

Furthermore, the drivetrain 13 as shown in FIG. 2 comprises a motion sensor 42 to determine a rotational speed ω₂ of the first output shaft 19. The motion sensor 42 may additionally determine a torque T₂ of the first output shaft 19. The motion sensor 42 transfers its measuring data wirelessly to the control unit 11a. The measuring data may be also transferred wirelessly to the control unit 11b. Alternatively, a rotational speed ω₃ and a torque T₃ of the rear axle 35 or a rotational speed ω₄ and a torque T₃₄ of the front axle 34 may be determined by additional motion sensors.

The engine 16, which may for example either be a combustion engine, an electric motor, a hydrogen engine or a hybrid drive, introduces a torque T₁ to the input shaft 18 rotating with the speed ω₁ to drive the adjustable hydraulic pump 28 via the second output shaft 21 of the planetary transmission 15 and the gear wheel stage 22, 23. The adjustable hydraulic pump 28 delivers hydraulic fluid to the hydraulic line 26 to drive the two adjustable hydraulic motors 29 and 30 (pull operations in forward direction). The adjustable hydraulic motors 29 and 30 introduce a torque to their corresponding output shafts 31, 32 and 33 to drive the front axle 34 and the rear axle 35 via the gear wheel stage 38, 43, and power train 39 as well as the gear wheel stage 24, 25 of the drivetrain 13. Front wheels 9 are connected with the front axle 34 and rear wheels 10 are connected with the rear axle 35. The front wheels 9 and the rear wheels 10 may rotate with their corresponding front and rear axles 34 and 35 to move the corresponding vehicle.

The measuring data may be sent from one entity to another entity via the data network 2. As mentioned above, each vehicle 3 to 6 may comprise a drivetrain 13 as shown in FIG. 2. Thus, a control unit 11a of one vehicle can communicate with a control unit 11a of another vehicle or with the control unit 11b for receiving or sending measuring data of the pressure sensor 40 and the motion sensor 42 of each vehicle 3 to 6. The control unit 11a of each vehicle and the control unit 11b may compare the measuring data from one vehicle with the measuring data of another vehicle or with reference data of the data source 8 and may display the results of the data comparison on the vehicle HMI 12 or the computer 7.

FIG. 3 shows a schematic representation of the control units 11a and 11b comprising an interface 44, a controller 46 and a memory 45. The control units 11a, 11b may receive and send signals or data via the interface 44. The interface 44 may be a wireless interface or a connector. The controller 46 may store the data or signals received by the corresponding control unit 11a, 11b in the memory 45. The memory 45 may contain additional data or executable computer program products, for example in terms of a computer-implemented method that may be retrieved, processed or carried out by the controller 46. Data or signals resulting from the processing of data or signals or from the execution of a computer program product may be stored to the memory 45 or sent to the interface 44 by the controller 46. Any data or signals may be displayed on the vehicle HMI 12 or on the screen of the computer 7. The control units 11a, 11b may be in communication with any sensor to receive the data sent by the sensor. The control unit 11a may be connected with any drive or actuator such as an actuator for adjusting the adjustable hydraulic pump 28, the adjustable hydraulic motors 29 and 30 and the engine 16 to control the drive or actuator.

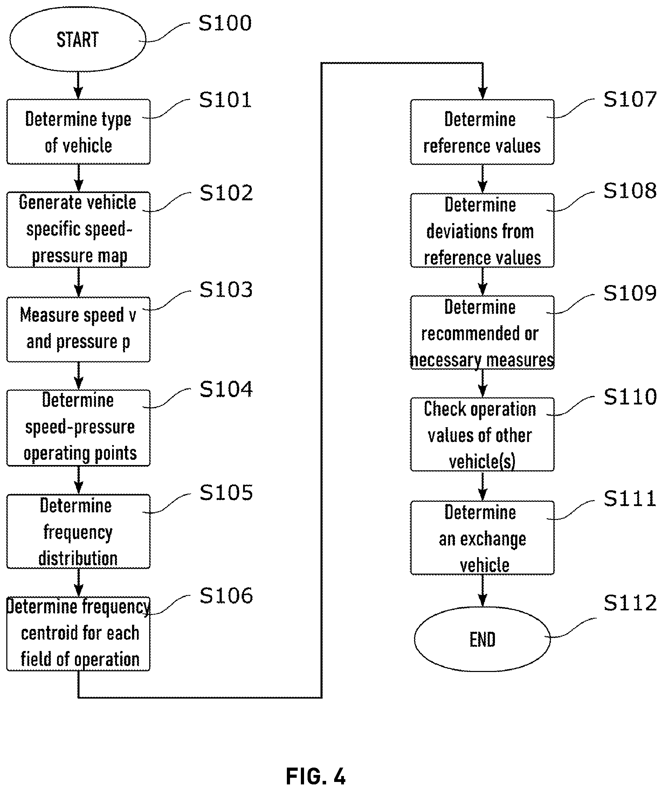

FIG. 4 shows a flow chart of a method for optimizing lifetime of a vehicle component. The method may be a computer-implemented method stored as a computer program product in the memory 45 of the at least one control unit 11a, 11b. The at least one control unit 11a, 11b is configured to carry out the method that may be executed by the controller 46 of the corresponding control unit 11a, 11b. The method may be executed onboard if carried out by the control unit 11a of the first vehicle 3 (or any other vehicle 4 to 6) or offboard if carried out by the control unit 11b of the computer 7. The method is described by way of example of several steps without any restriction in respect of that steps. I. e. the number or the order of steps may be adapted, for example single steps may be excluded and/or added and executed earlier or later than described. The method is now explained by way of example of control unit 11a and starts with step S100. Analogously, the method may be started and executed by the control unit 11b. Then, the method proceeds to step S101.

At step S101, the control unit 11a determines the type of the vehicle (e. g. tractor, harvester, ...) and the specific vehicle characteristics as model series, dimension of the vehicle, engine power, weight of the vehicle, authorized top speed vₜₒₚ of the vehicle, maximum allowed permanent load in terms of a maximum allowed permanent pressure pₘₐₓ of the vehicle component (e. g. of the hydraulic transmission 14), maximum allowed permanent speed vₘₐₓ of the vehicle, etc. The type of the vehicle and the characteristics are stored in the memory 45 and can be read out by the controller 46 via the data network 2.

### Generation of a speed-pressure map

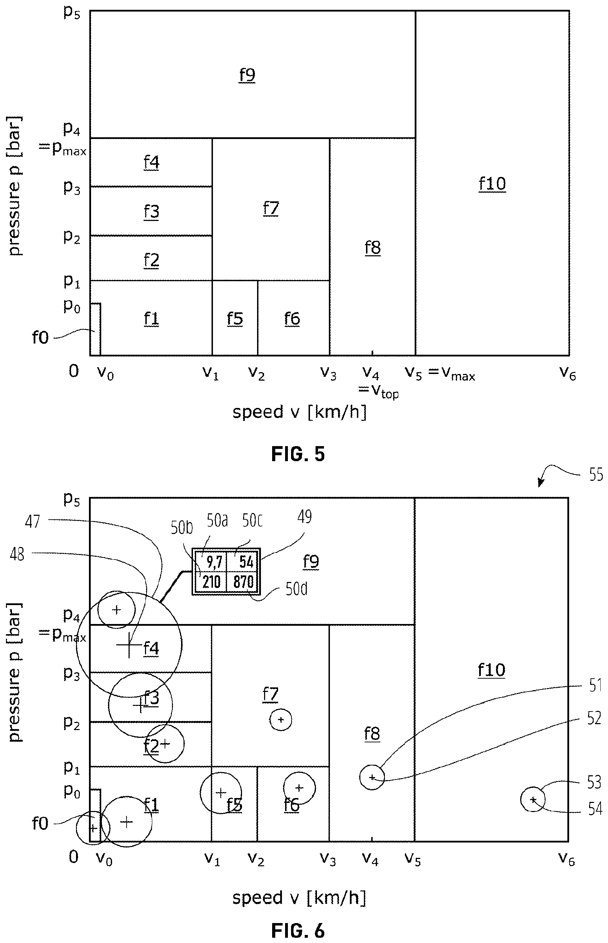

Then, the method proceeds to step S102 and the control unit 11a generates a vehicle specific speed-pressure map as depicted in FIG. 5 based on the characteristics v₄ indicating an authorized top speed vₜₒₚ, v₅ indicating a maximum allowed permanent speed vₘₐₓ and p₄ indicating a maximum allowed permanent pressure pₘₐₓ. The generated speed-pressure map is stored in memory 45 and is accessible by all entities via the data network 2 for further processing. The speed-pressure map as depicted in FIG. 5 may be displayed on a screen of the computer 7 or on a display of the vehicle HMI 12.

The detailed structure of the speed-pressure map is described in the following passages. The speed-pressure map comprises several fields of operation, here f0, f1, ..., f10. The fields of operation f0 to f10 are arranged one next to another. Each field of operation has a rectangular shape but different shapes may be possible such as any kind of a polygon. The fields of operation f0 to f8 are within the limits defined by the maximum allowed permanent speed v₅ (=vₘₐₓ) and the maximum allowed permanent pressure p₄ (=pₘₐₓ). The fields of operation f9 and f10 are outside the mentioned maximum allowed limits and represent extreme use or misuse.

The fields of operation can be classified as follows:
- Fields of operation representing very low load of the drivetrain 13 (very low pressure operations) at low speed
   f0: vehicle at / near standstill
   f1: start-up procedures of vehicle
   f5: transition section of start-up procedures and transport operations
- Fields of operation representing pulling operations
   f2: pulling operations with low load (low pressure operations)
   f3: pulling operations with medium load (medium pressure operations)
   f4: pulling operations with high load (high pressure operations)
- Fields of operation representing transport operations
   f6: acceleration / deceleration operations with very low / low load
   f7: acceleration / deceleration operations with medium / high load
   f8: transport operations at about top speed
- Fields of operation representing extreme use or misuse
   f9: pulling operations with excessive load (excessive pressure operations)
   f10: transport operations in overspeed range

As mentioned above, first vehicle 3 can be of any type, especially an agricultural vehicle with a transmission. It is assumed now for the following content, that the first vehicle 3 is a tractor. In case of another type of vehicle, e. g. a harvester, other fields of operations can be defined which are adapted to that type of vehicle. It is also possible, that depending on the specific vehicle characteristics the number, the size and / or the position of the fields of operation vary. E. g. additional fields of operation next to or in between the fields of operation shown in FIG. 5 could be defined. It is further assumed that the other vehicles 4 to 6 are of the same type as the first vehicle 3.

Field of operation f4 (pulling operations with high load) may be defined by pressure value p₃ and the maximum allowed permanent pressure p₄ wherein p₃ may be a pressure value between 65% and 75% of p₄. Field of operation f8 (transport operations at about top speed) may be defined by the speed values v₃ and v₅ wherein v₃ may be a speed value between 90% and 100% of v₄ (= vₜₒₚ) and v₅ may be a speed value between 115% and 125% of v₄ (= vₜₒₚ).

By way of example as described above the fields of operation are related to tractor specific operations such as pulling operations at low speed (e. g. to pull a plough over an agricultural field), or transport operations at high speed (e. g. to pull a trailer along a street). Dependent on the conditions of the field or the street, the tractive force needed to execute a pulling or transport operation may vary. For example, in case of a hard soil or a street having a high ascent, a greater tractive force or driving torque (sum of torques T₃ and T₄ - see FIG. 2) has to be provided by the drivetrain 13 of the first vehicle 3 than in case of a loose soil or a street having a descent. As a function of the needed driving torque the pressure p measured by the pressure sensor 40 increases or decreases. I. e., the pressure p measured by the pressure sensor 40 correlates with the tractive force or the driving torque of the drivetrain 13 correlating with the load of the drivetrain 13 caused by a specific operation of the first vehicle 3.

The method proceeds to step S103 to measure the speed v and the pressure p during a vehicle operation. The pressure sensor 40 senses the pressure p of the corresponding vehicle component as for example the pressure in the hydraulic line 26 or 27 of the hydraulic transmission 14 via the shuttle valve 41 depending on the driving situation (as explained above). The motion sensor 42 senses the rotational speed ω₂ of the first output shaft 19. Both values are received by the control unit 11a. Based on the rotational speed ω₂ and the ratios of the gear wheel stages as well as the differential gear the control unit 11a determines the speed v of the first vehicle 3 as already mentioned before. Speed v and pressure p are determined by the control unit 11a simultaneously and continuously in discrete time intervals (e. g. every second).

Then, the method proceeds to step S104 and the control unit 11a assigns each pressure value to a speed value determined in the same time interval as the pressure value so that a pressure value and a speed value of the same time interval define a speed-pressure operating point. Hence, for each time interval a corresponding speed value and pressure value are available. Each speed-pressure operating points can be stored in the memory 45 of the control unit 11a. The speed-pressure operating points may directly be processed (for example in case of an onboard processing) or at a later time (for example in case of an offboard processing by the computer 7).

### Determination of a load-speed spectrum

After the generation of the vehicle specific speed-pressure map was finished and the generation of pressure and speed values has started, the method proceeds with step S105 to determine a load-speed spectrum 55 for the first vehicle 3 based on a frequency distribution within the speed-pressure map as depicted in FIG. 6. The control unit 11a assigns each speed-pressure operating point to one of the different fields of operation f0 to f10. For example: A speed-pressure operation point having a speed value between v₁ and v₃ and a pressure value between p₁ and p₄ will be assigned to the field of operation f7. Analogously, all determined speed-pressure operation points of subsequent time intervals are assigned to the corresponding fields of operation f0 to f10.

In doing so, the control unit 11a then also determines the frequency distribution of the speed-pressure map by counting the number of speed-pressure operating points within each field of operation f0 to f10 and dividing this numbers by the overall number of speed-pressure operating points which were assigned to the speed-pressure map. That means, that the longer the first vehicle 3 was operating in one of the fields of operation f0 to f10 the higher the frequency value of the corresponding field of operation will be.

FIG. 6 shows exemplarily the load-speed spectrum 55 of the first vehicle 3 representing pressure values of the hydraulic transmission 14 as the vehicle component and speed values of the vehicle 3. The load-speed spectrum 55 is determined by the control unit 11a based on the speed-pressure map of FIG. 5 comprising a possible frequency distribution in the form of circles of different sizes for each field of operation f0 to f10 visualizing the frequency values. For example, a frequency value 47 was determined for the field of operation f4 and a frequency value 51 for the field of operation f8. The higher the frequency value of the field of operation is the greater is the size of the circle assigned to the corresponding field of operation.

Besides the frequency distribution for each field of operation f0 to f10 also the total number of operating hours (operating time) within each field of operation f0 to f10 may be calculated by the control unit 11a from the number of speed-pressure operating points within each field of operation f0 to f10 and the sampling rate (defined time interval) which was mentioned above. As mentioned, the frequency distribution of the load-speed spectrum 55 (see FIG. 6) may be representative for the first vehicle 3. As can be seen, first vehicle 3 was mainly used for pulling operations with high load because the field of operation f4 has the greatest frequency value 47 indicated by a circle having a center point within the field of operation f4 and having the greatest size compared to all other circles. Also the frequency value of the field of operation f3 is comparatively high. In contrast, the fields of operation f6, f7 and f8 comprise lower frequency values indicated by circles of smaller sizes. So, first vehicle 3 wasn't often used for transport operations.

The method proceeds to step S106 and the control unit 11a determines for all fields of operation f0 to f10 the frequency centroids by using the positions (v- and p-coordinate) of every speed-pressure operating point assigned to one of the fields of operation f0 to f10. The v-coordinate of a frequency centroid within a field of operation is determined by the arithmetic mean of all speed values (v-coordinates of every speed-pressure operating point) assigned to that field of operation. Analogously, the p-coordinate of a frequency centroid within a field of operation is determined by the arithmetic mean of all pressure values (p-coordinates of every speed-pressure operating point) assigned to that field of operation. I. e. the more frequently the first vehicle 3 was driving with a higher speed v the closer the frequency centroid will be located to the right border of the corresponding field of operation (v-coordinate). The more frequently the first vehicle 3 was operating with a higher pressure p the closer the frequency centroid will be located to the top border of the corresponding field of operation (p-coordinate).

As can be seen in FIG. 6, the v- and p-coordinate of each frequency centroid defines the position of the center point (in the form of a cross) of the circle representing the frequency value within the corresponding field of operation.

Steps S105 and S106 may be executed onboard by the control unit 11a integrated in the vehicle or offboard by the control unit 11b integrated in the computer 7. Since control unit 11a and control unit 11b have access to the same data for executing the method steps both control units 11a and 11b will provide the same results. The advantage of using onboard calculation is, that the memory capacity needed for memory 45 may always be the same irrespective of the number of speed-pressure operating points because the speed-pressure operating points don't need to be stored for any further processing after they were assigned and their position was processed. I. e. only the frequency values, the total number of hours for each field of operation and the positions of the frequency centroids are stored so that the number of stored values may always be the same. In addition, the speed-pressure map can be displayed time-invariant (i. e. without time delay) on the vehicle HMI 12 to the operator of the first vehicle 3. The advantage of using offboard calculation is that the speed-pressure operating points are stored and therefore available for further detailed processing besides filling the speed-pressure map and generating a load-speed spectrum.

Another additional advantage of the speed-pressure map (e. g. as shown in FIG. 5) is the non-equidistant division of the speed and pressure axles in the speed-pressure map. The class widths were defined individually for each field of operation f0 to f10. This also reduces the needed memory capacity.

In addition to the graphical representation of the load-speed spectrum 55 (position of the frequency centroids shown as crosses and circles representing frequency values for each field of operation), the load-speed spectrum may comprise exemplarily a dialog window 49 assigned to the field of operation f4 comprising a 1st value 50a showing the v-coordinate of the frequency centroid as a number, a 2nd value 50b showing the p-coordinate of the frequency centroid as a number, a 3rd value 50c showing the frequency value (in percent) as a number and a 4th value 50d showing the total number of hours within the field of operation f4. This dialog window 49 may be displayed on the vehicle HMI 12 or on the computer 7. For better clarity, the field of operation f4 only comprises a dialog window 49. But the load-speed spectrum may comprise additional dialog windows as described for each field of operation f0 to f10. The values 50a to 50d may be determined by the control unit 11a for each field of operation f0 to f10 and may be stored in the memory 45 for later processing. After completion of step S106, the vehicle operation values are fully determined.

### Determination of reference values

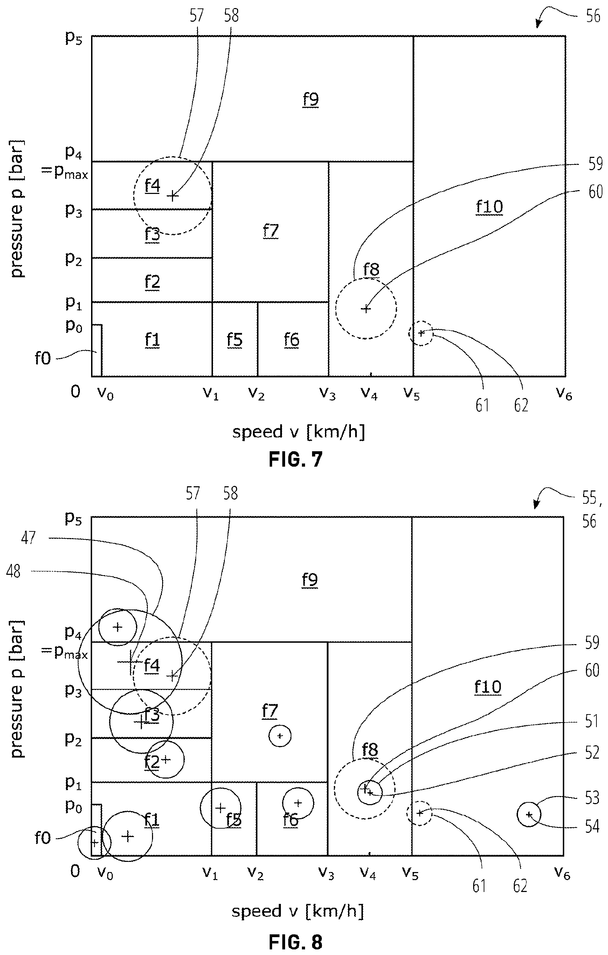

The method proceeds to step S107 to determine reference values in respect of the generated vehicle operation values, especially for the frequency values and the positions of the frequency centroids for each field of operation f0 to f10. The reference values are received by the control unit 11a in terms of a reference load-speed spectrum 56 as exemplarily shown in FIG. 7. The reference values depend on the type and the specific vehicle characteristics of the vehicle and may be recommended values defined by the manufacturer of the vehicle. Thus, the reference load-speed spectrum 56 is a recommended load-speed spectrum of the vehicle.

The reference values can be received by the control unit 11a via the data network 2 from a data source 8 of the manufacturer. The reference values can also be updated automatically. E. g. the control unit 11a can be synchronized via the data network 2 with a data source 8 of the manufacturer recommending updated reference values due to more available data based on vehicle operation values, maintenance and repair reports of vehicles of the same type and characteristics as of the first vehicle 3 which are also connected to data network 2 (e. g. vehicles 4, 5 and 6). That means, the manufacturer has the possibility to modify the reference values based on the available data from all connected vehicles 3 to 6. Additionally, it is possible to work out a global, regional, seasonal or business-typical reference load-speed spectrum 56 of each type of vehicle for example to have a better design basis for the next generation of vehicles.

The reference values refer to the frequency values and the positions of frequency centroids for each field of operation f0 to f10. The reference values may be for example recommended target values.

FIG. 7 shows exemplarily the reference load-speed spectrum 56 for a vehicle of the type of the first vehicle 3 based on a speed-pressure map as shown in FIG. 5 comprising reference values in terms of reference frequency values and reference centroids exemplarily for the fields of operation f4, f8 and f10. I. e. the fields of operation f4, f8 and f10 comprise positions of reference centroids 58, 60 and 62 and corresponding reference frequency values 57, 59 and 61 shown as dashed circles. For reasons of better clarity, reference values are only shown in FIG. 7 for the fields of operations f4, f8 and f10. Analogously, additional reference frequency values and reference centroids may be defined for the other field of operations f0 to f3, f5 to f7 and f9 so that a comparison of the vehicle operation values with the reference values is possible for each field of operation f0 to f10. Besides the reference values for the frequency values and the positions of frequency centroids there are also reference values for the total number of hours, which could for example be recommended limit values for each field of operation f0 to f10.

### Determination of deviations from reference values

The method proceeds to step S108 to determine deviations of the vehicle operation values from the corresponding reference values (e. g. target values) for each field of operation f0 to f10. Thus, the control unit 11a compares the load-speed spectrum 55 with the reference load-speed spectrum 56 to detect at least one deviation of the load-speed spectrum 55 from the reference load-speed spectrum 56 as can be seen in FIG. 8 showing an overlapping representation of the load-speed spectrum 55 and the reference load-speed spectrum 56. I. e., by doing a comparison between the vehicle operation values and the corresponding reference values for both frequency values and positions of frequency centroids the control unit 11a determines the kind and the amount of the deviation in order to finally classify the combination of kind and amount of deviation into levels of deviation with the aim to point out critical deviations for each field of operation f0 to f10. The kind of deviation distinguishes how a vehicle operation value (frequency value or a frequency centroid) of each field of operation f0 to f10 deviates from its corresponding reference value, e. g. whether the reference value is exceeded, fell below or met. The amount of deviation defines how much a vehicle operation value (frequency value or the position of the frequency centroid) of each field of operation f0 to f10 deviates from its corresponding reference value. The detailed procedure for both frequency values and positions of frequency centroids is described in the following passages.

To figure out the critical deviations of the frequency values from their corresponding reference frequency values for each field of operation f0 to f10 the difference between the two corresponding values needs to be calculated ("frequency difference value" = "frequency value" - "reference frequency value") whereby the calculated absolute values would be a degree for the amount of deviation which would be ranked into groups with specific tolerance borders as exemplarily shown in the following:
- "No deviation", if the frequency difference value is less than 1%,
- "Low deviation", if the frequency difference value is between 1% and 3%,
- "High deviation", if the frequency difference value is between 3% and 5%,
- "Very high deviation", if the frequency difference value is more than 5%, or
- even more groups.

The algebraic sign of the calculated frequency difference value is a degree for the kind of deviation and could be classified into
- shortfall if the frequency difference value is negative, and
- exceedance if the frequency difference value is positive.

Optionally, deviations from the absolute values of operating hours could be determined. The conclusion would be the same due to the fact that frequency values and absolute values can be converted into each other as already mentioned above by using the time intervals (sampling rate).

To figure out the critical deviations of the positions of frequency centroids from their corresponding position of reference centroids for each field of operation f0 to f10, centroid distance values between the two centroids in v- and p-direction (also called v-deviation and p-deviation) are calculated by the control unit 11a ("centroid p-distance" = "p-coordinate of centroid" - "p-coordinate of reference centroid"; "centroid v-distance" = "v-coordinate of centroid" - "v-coordinate of reference centroid") wherein the calculated absolute values would be a degree for the amount of deviation which would be ranked into groups by using specific tolerance borders as exemplarily shown in the following:

In p-direction:
- "No p-deviation", if the centroid p-distance value is less than 2 bar,
- "Low p-deviation", if the centroid p-distance value is between 2 and 5 bar,
- "High p-deviation", if the centroid p-distance value is between 5 and 10 bar,
- "Very high p-deviation", if the centroid p-distance value is more than 10 bar, or
- even more groups.

In v-direction:
- "No v-deviation", if the centroid v-distance value is less than 1 km/h,
- "Low v-deviation", if the centroid v-distance value is between 1 and 3 km/h,
- "High v-deviation", if the centroid v-distance value is between 3 and 5 km/h,
- "Very high v-deviation", if the centroid v-distance value is more than 5 km/h, or
- even more groups.

The algebraic sign of the calculated centroid distance values is a degree for the kind of deviation and could be classified into

In p-direction:
- further up, if the centroid p-distance value is positive, and
- further down, if the centroid p-distance value is negative.

In v-direction:
- more right, if the centroid v-distance value is positive, and
- more left, if the centroid v-distance value is negative.

The number of groups and the values of the tolerance borders of each group (for both frequency values and positions of frequency centroids) can be defined individually for each field of operation f0 to f10.

After the frequency difference values and the centroid distance values are ranked (amount) and classified (kind) the control unit 11a determines for each field of operation f0 to f10 a level of deviation based on the combination of the kind and the amount of deviation for both frequency values and frequency centroids in respect of separate tolerance ranges. The tolerance ranges may be provided by the data source 8 of the manufacturer and may be received by the control unit 11a via the data network 2. The tolerance ranges may be stored in a (look-up) table.

The levels of deviation may be critical or uncritical. Additional critical levels of deviation are possible such as very critical and extreme critical so that the number of levels may be defined individually.

The tables shown below summarize exemplarily the kind and amount of deviation (for both, frequency values and positions of frequency centroids) and also the finally determined levels of deviation of the fields of operation f4, f8 and f10 for the first vehicle 3 based on the information from the load-speed spectrum 55 shown in FIG. 8 which would be determined by the control unit 11a (based on the calculated frequency difference values and the centroid distance values). For better clarity, the fields of operations f4, f8 and f10 are used only. But for doing a real fulfillment comparison, the control unit 11a considers all fields of operation f0 to f10 for the comparison of the load-speed spectrum with the reference load-speed spectrum.

| **Field of operation** | **Frequency difference values** | | |
|---|---|---|---|
| | **Kind** | **Amount** | **Level of deviation** |
| ... | ... | ... | |
| **f4** | exceedance | high deviation | critical |
| ... | ... | ... | |
| **f8** | shortfall | very high deviation | uncritical |
| ... | ... | ... | |
| **f10** | exceedance | no deviation | uncritical |

| **Field of operation** | **Centroid distance values** | | | | |
|---|---|---|---|---|---|
| | **p-direction** | | **v-direction** | | **Level of deviation** |
| | **Kind** | **Amount** | **Kind** | **Amount** | |
| ... | ... | | | | |
| **f4** | further up | high deviation | more left | very high deviation | critical |
| ... | ... | | | | |
| **f8** | further down | no deviation | more right | no deviation | uncritical |
| ... | ... | | | | |
| **f10** | further up | no deviation | more right | very high deviation | extreme critical |

As shown in FIG. 8, field of operation f4 comprises a frequency value 47 with a position of the frequency centroid 48 and the corresponding reference frequency value 57 with a position of the reference centroid 58 which indicates in general that the first vehicle 3 has been operated
- more often (due to a larger diameter of the circle representing frequency value 47 compared to the circle representing reference frequency value 57)
- at higher pressure p (due to the position of the frequency centroid 48 which is further up than the position of the reference centroid 58)
- but with lower speed v (due to the position of the frequency centroid 48 which is more left than the position of the reference centroid 58)
than recommended for that type of vehicle (with specific vehicle characteristics) in the field of operation f4. As a consequence, wear of components of the first vehicle 3, which are highly stressed under pulling conditions may be increased and the expected lifetime of these vehicle components may be lower.

The calculation of the frequency difference value of frequency value 47 and reference frequency value 57 for the field of operation f4 would provide the following result:
- kind: "exceedance", because the frequency difference value is positive, and
- amount: "high deviation", because the frequency difference value would be between 3% and 5%.

Hence, the combination of the results expresses a critical level of deviation of frequency value 47.

The calculation of the centroid p-distance of the frequency centroid 48 and the reference centroid 58 for the field of operation f4 would provide the following result:
- kind: "further up", because the centroid p-distance is positive, and
- amount: "high deviation", because the centroid p-distance would be between 5 bar and 10 bar.

The calculation of the centroid v-distance of the frequency centroid 48 and the reference centroid 58 for the field of operation f4 would provide the following result:
- kind: "more left", because the centroid v-distance is negative, and
- amount: "very high deviation", because the centroid v-distance would be between 3 km/h and 5 km/h.

Hence, the combination of the results expresses a critical level of deviation of the frequency centroid 48.

Thus, a double critical deviation in respect of the field of operation f4 has been determined.

As shown in FIG. 8, field of operation f8 comprises a frequency value 51 with a position of the frequency centroid 52 and the corresponding reference frequency value 59 with a position of the reference centroid 60 which indicates that the first vehicle 3 has been operated
- less often (due to a smaller diameter of the circle representing frequency value 51 compared to the circle representing reference frequency value 59)
- at little lower pressure p (due to the position of the frequency centroid 52 which is a little further down than the position of the reference centroid 60)
- but little higher speed v (due to the position of the frequency centroid 52 which is a little more right than the position of the reference centroid 60)
than recommended according to the load conditions (concerning pressure and speed values) for that type of vehicle (with specific vehicle characteristics) in the field of operation f8. As a consequence, wear of components of the first vehicle 3 which are highly stressed under transport conditions may be lower and the expected lifetime of these vehicle components may be higher.

The calculation of the frequency difference value of the frequency value 51 and the reference frequency value 59 for the field of operation f8 would provide the following result:
- kind: "shortfall", because the frequency difference value is negative, and
- amount: "very high deviation", because the frequency difference value would be more than 5%.

Hence, the combination of the results expresses an uncritical level of deviation of the frequency value 51.

The calculation of the centroid p-distance of the frequency centroid 52 and the reference centroid 60 for the field of operation f8 would provide the following result:
- kind: "further down", because the centroid p-distance is negative, and
- amount: "no deviation", because the centroid p-distance is less than 2 bar.

The calculation of the centroid v-distance of the frequency centroid 52 and the reference centroid 60 for the field of operation f8 would provide the following result:
- kind: "more right", because the centroid v-distance is positive, and
- amount: "no deviation", because the centroid v-distance would be less than 1 km/h.

Hence, the combination of the results expresses an uncritical level of deviation of the frequency centroid 52.

Thus, no critical deviation in respect of the field of operation f8 has been determined.

As shown in FIG. 8, field of operation f10 comprises a frequency value 53 with a position of the frequency centroid 54 and the corresponding reference frequency value 61 with a position of the reference centroid 62 which indicates that the first vehicle 3 has been operated
- in approximately same operating times (due to almost the same diameter of the circle representing frequency value 53 compared to the circle representing reference frequency value 61)
- at approximately the same pressure p (due to the position of the frequency centroid 54 which is approximately at the same height as the position of the reference centroid 62)
- but at much higher speed v (due to the position of the frequency centroid 54 which is more right than the position of the reference centroid 62)
than recommended for that type of vehicle (with specific vehicle characteristics) in the field of operation f10. Although the frequency value 53 is rather low and would be within the defined tolerance the extreme position of the frequency centroid 54 can indicate an abnormal use or a misuse of the first vehicle 3 increasing the risk of a failure. Analogously, an extreme position in any other field of operation, as for example in the field of operation f9, may indicate an abnormal use.

The calculation of the frequency difference value of the frequency value 53 and the reference frequency value 61 for the field of operation f10 would provide the following result:
- kind: "exceedance", because the frequency difference value is positive, and
- amount: "no deviation", because the frequency difference value would be less than 1%.

Hence, the combination of the results expresses an uncritical level of deviation of the frequency value 53.

The calculation of the centroid p-distance of the frequency centroid 54 and the reference centroid 62 for the field of operation f10 would provide the following result:
- kind: "further up", because the centroid p-distance is positive, and
- amount: "no deviation", because the centroid p-distance would be less than 2 bar.

The calculation of the centroid v-distance of the frequency centroid 54 and the reference centroid 62 for the field of operation f10 would provide the following result:
- kind: "more right", because the centroid v-distance is positive, and
- amount: "very high deviation", because the centroid v-distance would be more than 5 km/h.

Hence, the combination of the results expresses an extreme critical level of deviation of the frequency centroid 54.

Thus, a single critical deviation in respect of the field of operation f10 has been determined.

For better clarity the number of groups and the values of the tolerance borders for each level (for both frequency values and positions of frequency centroids) were taken as described before but could of course be defined individually for each field of operation f0 to f10 as already mentioned.

Optionally, the type of the implement connected to the first vehicle 3 and pulled by the first vehicle 3 during the vehicle operations may be recorded and stored in the memory 45 by the control unit 11a. Then, if any frequency value or a position of any frequency centroid deviates from a reference value of one of the fields of operation f0 to f10 so that a critical deviation has been detected by the control unit 11a (e. g. in a field of operation representing pulling operations as f2, f3 and f4), the control unit 11a may determine by which implement the critical deviation was caused.

For example, if the deviation from the reference frequency value 57 and the reference centroid 58 in the field of operation f4 (see FIG. 8) was caused by pulling operations with a plough as an implement connected with the first vehicle 3, a measure to avoid the deviation of the reference values could be to exchange the plough by an implement causing less load during the operations so that the frequency value 47 and / or the position of the frequency centroid 48 of the field of operation f4 will cause a minor deviation from the reference frequency value 57 and reference centroid 58 only.

Analogously, the tasks (defined in a task management system) executed by the first vehicle 3 during a vehicle operation can be recorded to determine by which tasks a deviation of the reference value was caused.

### Determination of measures

The method proceeds to step S109 and the control unit 11a determines recommended or necessary measures to mitigate the risk of a failure or to enhance the lifetime of the vehicle component, as for example the transmission. The measures are based on the fulfillment comparison between frequency values and frequency centroids as depicted in the load-speed spectrum with their corresponding reference values and are determined as a function of:
- the determined levels of deviation regarding the frequency difference values for all fields of operation f0 to f10, and / or
- the determined levels of deviation regarding the centroid distance values for all fields of operation f0 to f10.

Based on the levels of deviation at least one of the following measures will be recommended by the control unit 11a:
- Change operating conditions:
   o Use another type(s) of implement;
   o Use another implement (same type, but larger or smaller);
   o Change conditions of use (e. g. speed, implement settings, ...), e. g. to reduce load;
   o Execute other types of tasks;
   o Increase same type of operation (e. g. transport operation instead of pulling operation or the other way round);
   o Increase another type of operation (e. g. transport operation instead of pulling operation or the other way round);
- Service inspection for maintenance required:
   o Preventive maintenance to avoid a breakdown of the vehicle;
- Buy and / or sell recommendation:
   o Suggestion to buy a new vehicle with different characteristics (more or less power, weight, ...);
   o Suggestion to sell the vehicle to a user with contrary usage requirements (e. g. a lot of transport operation if up to now mainly used in pulling operations, or the other way round, ...);
- Misuse prevention (especially by consideration of fields of operation f9 and f10):
   o Warning message to avoid transport operations with too high vehicle speed;
   o Warning message to reduce operations of excessive pressure;
   o Suggestion to buy a new vehicle having improved characteristics (e. g. more power for pulling operations with high load or a higher authorized top speed vₜₒₚ , ...);
- Flexible service intervals (especially regarding the oil and the filters):
   o Suggestion to do an oil and / or filter service earlier or later as originally required (e. g. in the service manual) based on the speed-pressure map and the resulting target / actual performance comparison of the load-speed spectrum;

The following scenarios should demonstrate which specific measures could be recommended by the control unit 11a depending on the combination of the levels of deviation. Only one critical deviation will not necessarily and immediately result in a measure, but could. It always depends on the degree of severity of each single deviation in combination with the other determined deviations (frequency value and position of frequency centroid).

With respect to a field of operation representing pulling operations (f2, f3, f4, f9), if at least one frequency value deviates from a reference frequency value wherein the deviation is determined as critical and the deviation of the frequency centroids (frequency centroid and corresponding reference centroid) is determined as uncritical the control unit 11a may do at least one of the following measures depending on the degree of severity of the real values (single critical deviation):
- send a warning message to reduce pulling operations;
- send a recommendation to increase another type of operation, especially transport operations.

With respect to a field of operation representing pulling operations (f2, f3, f4, f9), if at least one frequency value deviates from a reference frequency value wherein the deviation is determined as critical and if at least one position of the frequency centroid deviates from a reference centroid wherein the deviation is determined as critical the control unit 11a may do at least one of the following measures depending on the real values (double critical deviation):
- send a warning message to reduce pulling operations;
- send a recommendation to increase another type of operation, especially transport operations;
- send a recommendation to use another type of implement;
- send a recommendation to execute other types of tasks;
- send a recommendation to schedule a service inspection for maintenance;
- send a suggestion to buy a new vehicle having improved characteristics for pulling operations.

With respect to a field of operation representing transport operations (f6, f7, f8, f10), if at least one frequency value deviates from a reference frequency value wherein the deviation is determined as critical and the deviation of the frequency centroid (frequency centroid and corresponding reference centroid) is determined as uncritical the control unit 11a may do at least one of the following measures depending on the degree of severity of the real values (single critical deviation):
- send a warning message to reduce transport operations;
- send a recommendation to increase another type of operation, especially pulling operations.

With respect to a field of operation representing transport operations (f6, f7, f8, f10), if at least one frequency value deviates from a reference frequency value wherein the deviation is determined as critical and if at least one position of the frequency centroid deviates from the corresponding reference centroid wherein the deviation is determined as critical the control unit 11a may do at least one of the following measures depending on the real values (double critical deviation):
- send a warning message to reduce transport operations;
- send a recommendation to increase another type of operation, especially pulling operations;
- send a warning message to reduce vehicle speed;
- send a recommendation to use another type of implement;
- send a recommendation to execute other types of tasks;
- send a recommendation to schedule a service inspection for maintenance;
- send a suggestion to buy a new vehicle having improved characteristics, especially a higher authorized top speed vₜₒₚ and / or engine power.

With respect to the field of operation representing pulling operations with excessive load (f9), if the frequency value deviates from the reference frequency value wherein the deviation is determined as critical or if the position of the frequency centroid deviates from the corresponding reference centroid wherein the deviation is determined as critical the control unit 11a may do at least one of the following measures depending on the real values (single/double critical deviation):
- send a warning message to reduce operations of excessive pressure;
- send a suggestion to buy a new vehicle having improved characteristics for pulling operations;
- send a recommendation to schedule a service inspection for maintenance.

With respect to the field of operation representing transport operations in overspeed range (f10), if the frequency value deviates from the reference frequency value wherein the deviation is determined as critical or if the position of the frequency centroid deviates from the corresponding reference centroid wherein the deviation is determined as critical the control unit 11a may do at least one of the following measures depending on the real values (single/double critical deviation):
- send a warning message to reduce vehicle speed;
- send a suggestion to buy a new vehicle having improved characteristics, especially a higher authorized top speed vₜₒₚ;
- send a recommendation to schedule a service inspection for maintenance.

The messages, recommendations and suggestions can be displayed on the computer 7 or the vehicle HMI 12.

### Check operation values of other vehicles

The method steps to step S110 to check the vehicle operation values of the other vehicles 4 to 6 next to the first vehicle 3. Analogously as described for the first vehicle 3, the control unit 11a determines the vehicle operation values according to steps S101 to S106 for the vehicles 4 to 6. The vehicle operation values may be determined offboard by the control unit 11b integrated in the computer 7 or onboard by one of the control units 11a integrated in the vehicles 3 to 6. I. e., the control unit 11a of each additional vehicle 4 to 6 or the control unit 11b may determine a load-speed spectrum for each additional vehicle 4 to 6 next to the first vehicle 3.

Analogous to the steps S107 to S108, the control unit 11a determines a reference load-speed spectrum comprising reference values for each field of operation f0 to f10 in respect of the vehicle operation values of each additional vehicle 4 to 6. Each vehicle 3 to 6 has its own reference load-speed spectrum. The reference load-speed spectrums of the first vehicle 3 and the reference load-speed spectrum of one of the additional vehicles 4 to 6 may be the same, for example if the first and the additional vehicle are of the same type and/or have very similar characteristics. The control unit 11a compares the load-speed spectrum of each additional vehicle 4 to 6 with its corresponding reference load-speed spectrum to determine any deviations of the vehicle operation values from the corresponding reference values (levels of deviation) for each other vehicle 4 to 6 in a similar manner as mentioned above (see step S108).

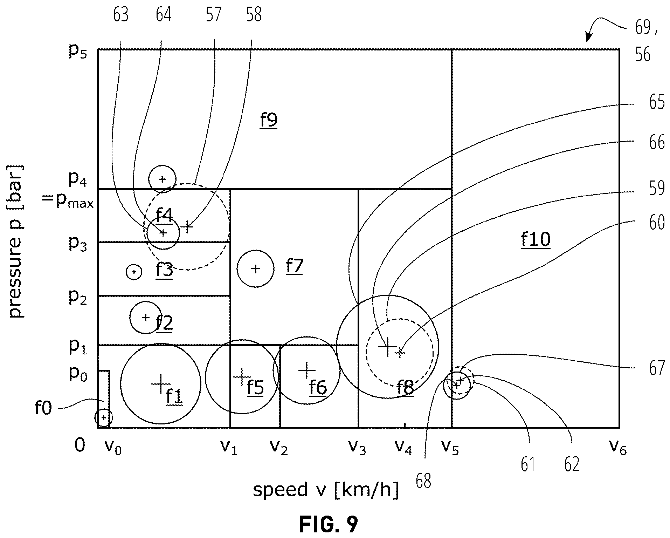

For example, the control unit 11a may determine a load-speed spectrum 69 for the second vehicle 4 as depicted in FIG. 9 as a result of the execution of step S110. Since the first vehicle 3 and the second vehicle 4 are of the same type having very similar characteristics, the control unit 11a determines the reference load-speed spectrum 56 of the first vehicle 3 as the reference load-speed spectrum of the second vehicle 4. I. e., the reference load-speed spectrum of the first vehicle 3 and the reference load-speed spectrum of the second vehicle 4 are the same and may comprise reference values as depicted in FIG. 7.

As can be seen in FIG. 9, the second vehicle 4 was mainly used for transport operations. The field of operation f8 has the greatest frequency value 65 indicated by a circle having a center point within the field of operation f8 and having the greatest size compared to all other circles. Also the frequency values of the other fields of operation representing transport operations as the fields of operation f5 and f6 are comparatively high. In contrast, the fields of operation f2, f3 and f4 representing pulling operations comprise lower frequency values indicated by circles of smaller sizes. So, the second vehicle 4 wasn't often used for pulling operations.

The control unit 11a determines the frequency difference values and centroid distance values as well as the levels of deviation based on the comparison of the load-speed spectrum 69 of the second vehicle 4 with the reference load-speed spectrum 56 shown in FIG. 9. The tables shown below summarizes exemplarily the kind and amount of deviation (for both frequency values and positions of frequency centroids) and also the finally determined level of deviation for the fields of operation f4, f8 and f10 for the second vehicle 4. For better clarity, the fields of operations f4, f8 and f10 are used for the example only. But for doing a real fulfillment comparison, the control unit 11a considers all fields of operation f0 to f10 for the comparison of the load-speed spectrum 69 of the second vehicle 4 with the reference load-speed spectrum 56.

| **Field of operation** | **Frequency difference values** | | |
|---|---|---|---|
| | **kind** | **amount** | **Level of deviation** |
| ... | ... | | |
| **f4** | shortfall | very high deviation | uncritical |
| ... | ... | | |
| **f8** | exceedance | very high deviation | very critical |
| ... | ... | | |
| **f10** | exceedance | no deviation | uncritical |

| **Field of operation** | **Centroid distance values** | | | | |
|---|---|---|---|---|---|
| | **p-direction** | | **v-direction** | | **Level of deviation** |
| | **kind** | **amount** | **kind** | **amount** | |
| ... | ... | | | | |
| **f4** | further down | low deviation | more left | high deviation | uncritical |
| ... | ... | | | | |
| **f8** | further up | low deviation | more left | low deviation | uncritical |
| ... | ... | | | | |
| **f10** | further down | no deviation | more left | no deviation | uncritical |

As can be seen in FIG. 9, field of operation f4 comprises a frequency value 63 with a position of the frequency centroid 64 and the corresponding reference frequency value 57 with a position of the reference centroid 58 which indicates that the second vehicle 4 has been operated less often, at lower pressure and with lower speed than recommended for that type of vehicle (with specific vehicle characteristics) in the field of operation f4. As a consequence, the expected lifetime of a vehicle component of the second vehicle 4 which is highly stressed under pulling conditions may be higher.

The calculation of the frequency difference value of the frequency value 63 and the reference frequency value 57 for the field of operation f4 would provide the following result:
- kind: "shortfall", and
- amount: "very high deviation".
Hence, the combination of the results expresses an uncritical level of deviation of the frequency value 63.

The calculation of the centroid p-distance of the frequency centroid 64 and the reference centroid 58 for the field of operation f4 would provide the following result:
- kind: "further down", and
- amount: "low deviation".

The calculation of the centroid v-distance of the frequency centroid 64 and the reference centroid 58 for the field of operation f4 would provide the following result:
- kind: "more left", and
- amount: "very high deviation".

Hence, the combination of the results expresses an uncritical level of deviation of the frequency centroid 64.

Thus, no critical deviation in respect of the field of operation f4 has been determined.

As can also be seen in FIG. 9, the field of operation f8 comprises a frequency value 65 with a position of the frequency centroid 66 and the corresponding reference frequency value 59 with a position of the reference centroid 60 which indicates that the second vehicle 4 has been operated more often, at higher pressure but with lower speed than recommended for that type of vehicle (with specific vehicle characteristics) in the field of operation f8. As a consequence, wear of components of the second vehicle 4 which are highly stressed under transport conditions may be increased and the expected lifetime of the second vehicle 4 may decrease.

The calculation of the frequency difference value of the frequency value 65 and the reference frequency value 59 for the field of operation f8 would provide the following result:
- kind: "exceedance", and
- amount: "very high deviation".

Hence, the combination of the results expresses a very critical level of deviation of the frequency value 65.

The calculation of the centroid p-distance of the frequency centroid 66 and the reference centroid 60 for the field of operation f8 would provide the following result:
- kind: "further up", and
- amount: "low deviation".

The calculation of the centroid v-distance of the frequency centroid 66 and the reference centroid 60 for the field of operation f8 would provide the following result:
- kind: "more left", and
- amount: "low deviation".

Hence, the combination of the results expresses an uncritical level of deviation of the frequency centroid 66.

Thus, a single critical deviation in respect of the field of operation f8 has been determined.

FIG. 9 also shows a frequency value 67 of the field of operation f10 having a frequency centroid 68 positioned very close to the maximum allowed permanent speed v₅ = vₘₐₓ and also close to the position of the reference centroid 62 which would be within the defined tolerance range. I. e., the position of the reference centroid 62 within the field of operation f10 can't be interpreted as extreme. In addition, the frequency value 67 is rather low and would also be within the defined tolerance range. So, the operation of the second vehicle 4 in the field of operation f10 can be neglected by the control unit 11a. A risk of a failure of a vehicle component of the second vehicle 4 due to transport operations in overspeed range (misuse) wouldn't be expected.

FIG. 9 also shows the field of operation f10 comprising a frequency value 67 with a position of the frequency centroid 68 and the corresponding reference frequency value 61 with a position of the reference centroid 62 indicates in general that the second vehicle 4 has been operated in approximately same proportions of operating time, at approximately the same pressure p and at approximately the same speed (i. e. the position of the frequency centroid 68 within the field of operation f10 can't be interpreted as extreme) as recommended for that type of vehicle (with specific vehicle characteristics) in the field of operation f10. As a consequence, a risk of a failure of a vehicle component of the second vehicle 4 due to transport operations in overspeed range (misuse) wouldn't be expected.

The calculation of the frequency difference value of the frequency value 67 and the reference frequency value 61 for the field of operation f10 would provide the following result:
- kind: "exceedance", and
- amount: "no deviation".

Hence, the combination of the results expresses an uncritical level of deviation of the frequency value 67.

The calculation of the centroid p-distance of the frequency centroid 68 and the reference centroid 62 for the field of operation f10 would provide the following result:
- kind: "further down", and
- amount: "no deviation".

The calculation of the centroid v-distance of the frequency centroid 68 and the reference centroid 62 for the field of operation f10 would provide the following result:
- kind: "more left", and
- amount: "no deviation".

Hence, the combination of the results expresses an uncritical level of deviation of the frequency centroid 68.

Thus, no critical deviation in respect of the field of operation f10 has been determined.

Analogously to the step S109, the control unit 11a determines recommended or necessary measures for the second vehicle 4 and each other vehicle 5 to 6.

### Determine an exchange vehicle

Then, the method proceeds to step S111 to determine an exchange vehicle out of the other vehicles 4 to 6. The exchange vehicle is intended to be used for vehicle operations instead of the first vehicle 3 due to critical deviations which were detected at the first vehicle 3. To determine an exchange vehicle the control unit 11a compares the levels of deviation (for both frequency values and positions of frequency centroids) of every field of operation f0 to f10 of the first vehicle 3 with the corresponding values of the other vehicles 4 to 6 with focus on the fields of operation of the first vehicle 3 having a critical deviation from the reference values. The control unit 11a may search for an exchange vehicle out of the other vehicles 4 to 6 having as much contrary deviations (number and degree) as possible in respect of the first vehicle 3. The exchange vehicle shouldn't have a critical deviation in a field of operation in which the first vehicle 3 has a critical deviation.

The following tables exemplarily show a comparison of the levels of deviation of the first vehicle 3 and the second vehicle 4. For better clarity, the fields of operation f4, f8 and f10 are filled with levels of deviation only wherein the control unit 11a may compare the levels of deviation for all vehicles 3 to 6 and for all fields of operation f0 to f10.

| **Field of operation** | **Level of deviation regarding frequency difference values** | | | |
|---|---|---|---|---|
| | **First vehicle 3** | **Second vehicle 4** | **Third vehicle 5** | Fourth vehicle 6 |
| ... | ... | ... | ... | ... |
| **f4** | critical | uncritical | ... | ... |
| ... | ... | ... | ... | ... |
| **f8** | uncritical | very critical | ... | ... |
| ... | ... | ... | ... | ... |
| **f10** | uncritical | uncritical | ... | ... |

| **Field of operation** | **Level of deviation regarding centroid distance values** | | | |
|---|---|---|---|---|
| | **First vehicle 3** | **Second vehicle 4** | **Third vehicle 5** | Fourth vehicle 6 |
| ... | ... | ... | ... | ... |
| **f4** | critical | uncritical | ... | ... |
| ... | ... | ... | ... | ... |
| **f8** | uncritical | uncritical | ... | ... |
| ... | ... | ... | ... | ... |
| **f10** | extreme critical | uncritical | ... | ... |

The control unit 11a selects the fields of operation of the first vehicle 3 which have critical deviations as the fields of operation f4 and f10 and compares the levels of deviation of the selected fields of operation with the levels of deviation of the corresponding fields of operation of the second vehicle 4 (and of all subsequent vehicles 5, 6). As can be seen, the level of deviation of the field of operation f4 is critical for both frequency difference value and centroid distance value regarding the first vehicle 3 whereas the corresponding levels of deviation regarding the second vehicle 4 are classified as uncritical. Furthermore the level of deviation of the field of operation f10 is extreme critical for the centroid distance value regarding the first vehicle 3 whereas the corresponding level of deviation regarding the second vehicle 4 is again classified as uncritical. Thus, the levels of deviation of the selected fields of operation f4 and f10 of the second vehicle 4 are all uncritical. The control unit 11a may verify whether the other fields of operation of the second vehicle 4 may have appropriate levels of deviation which do not prevent a selection of the second vehicle 4 as an exchange vehicle. As this is not the case, the control unit 11a detects on the basis of the levels of deviation that the second vehicle 4 would be a possible candidate to be selected as an exchange vehicle. If so, the control unit 11a would check whether the third or the fourth vehicle 5 or 6 would be a better candidate for the exchange vehicle based on the levels of deviation (analogously as explained by way of example of the second vehicle 4).

Thus, the control unit 11a determines the second vehicle 4 as exchange vehicle for the first vehicle 3. The control unit 11a may create a message to use the second vehicle 4 instead of the first vehicle 3 to complete the vehicle operations, especially the pulling operations. The message may be displayed on the computer 7 or on the vehicle HMI 12 of the first vehicle 3.

As already mentioned, it was assumed for better clarity that the first and the second vehicle 3 and 4 are of the same type (e. g. a tractor) and may have same specific vehicle characteristics. I. e., the speed-pressure map as shown in FIG. 5 and the reference load-speed spectrum comprising the related reference values (reference frequency values and position of the reference centroids in each field of operation) as shown in FIG. 7 are the same. But in general it is possible and common to determine an exchange vehicle of the same type but with different specific vehicle characteristics. Hence, the recommendation of an exchange vehicle is based on the comparison of vehicles concerning the determined levels of deviation for the fields of operations f0 to f10.

Finally, the measures to mitigate the risk of a failure or to enhance the lifetime of the first vehicle 3 and its components are determined as a function of:
- the determined levels of deviation regarding the frequency difference values for all fields of operation f0 to f10, and / or
- the determined levels of deviation regarding the centroid distance values for all fields of operation f0 to f10.

Furthermore, the described method may also be used to define flexible service intervals for the first vehicle 3 and its components, as e. g. the transmission, depending on the generated load-speed spectrum and the resulting fulfillment comparison between the load-speed spectrum and the reference load-speed spectrum.

### LISTING OF DRAWING ELEMENTS

1 system
2 data network
3 first vehicle
4 second vehicle
5 third vehicle
6 fourth vehicle
7 computer
8 data source
9 front wheel
10 rear wheel
11a control unit
11b control unit
12 vehicle HMI
13 drivetrain
14 hydraulic transmission
15 planetary transmission
16 engine
17 clutch
18 input shaft
19 first output shaft
20 differential gear
21 second output shaft
22 gear wheel stage
23 gear wheel stage
24 gear wheel stage
25 gear wheel stage
26 hydraulic line
27 hydraulic line
28 adjustable hydraulic pump
29 adjustable hydraulic motor
30 adjustable hydraulic motor
31 output shaft
32 output shaft
33 output shaft
34 front axle
35 rear axle
36 clutch
37 clutch
38 gear wheel stage
39 power train
40 pressure sensor
41 shuttle valve
42 motion sensor
43 gear wheel stage
44 interface
45 memory
46 controller
47 frequency value
48 frequency centroid
49 dialog window
50a value
50b value
50c value
50d value
51 frequency value
52 frequency centroid
53 frequency value
54 frequency centroid
55 load-speed spectrum
56 reference load-speed spectrum
57 reference frequency value
58 reference centroid
59 reference frequency value
60 reference centroid
61 reference frequency value
62 reference centroid
63 frequency value
64 frequency centroid
65 frequency value
66 frequency centroid
67 frequency value
68 frequency centroid
69 load-speed spectrum

## Claims

1. A system (1) for optimizing lifetime of a vehicle, comprising a control unit (11a, 11b);
a first vehicle (3) comprising
a first component;
a sensor (40) for determining at least one load value representing a load of the first component; and
a sensor (42) for determining at least one speed value corresponding to the at least one load value representing a vehicle speed;
wherein the control unit (11a, 11b) is configured
to determine a load-speed spectrum (55) of the first vehicle (3), the load-speed spectrum (55) comprising at least one frequency value representing an operating time of the first vehicle (3) in respect of the at least one load value and the at least one speed value corresponding to the at least one load value;
to determine a reference load-speed spectrum (56) for the first vehicle (3) comprising at least one reference frequency value corresponding to the at least one frequency value of the load-speed spectrum (55);
to compare the load-speed spectrum (55) of the first vehicle (3) with the reference load-speed spectrum (56);
to detect at least one deviation of the load-speed spectrum (55) of the first vehicle (3) from the reference load-speed spectrum (56); and
to determine a measure for optimizing the lifetime of the first vehicle (3) in respect of the at least one deviation.

2. The system (1) of claim 1, wherein the first component is a transmission and the at least one load value representing the load of the first component is a pressure value of the transmission.

3. The system (1) of claim 2, wherein
the transmission comprises a hydraulic transmission (14); and
the pressure value of the hydraulic transmission (14) is a pressure value of a hydraulic line (26, 27) connecting a hydraulic pump (28) and a hydraulic motor (29, 30) of the hydraulic transmission (14).

4. The system (1) of any one of claims 1 to 3, wherein the control unit (11a, 11b) is configured
to determine a frequency centroid of the at least one frequency value of the load-speed spectrum (55) of the first vehicle (3) based on the arithmetic mean of all speed values and load values of the at least one frequency value; and
to determine a reference centroid of the at least one reference frequency value of the reference load-speed spectrum (56).

5. The system (1) of any one of claims 1 to 4, wherein the control unit (11a, 11b) is configured
to detect a single critical deviation of the load-speed spectrum (55) of the first vehicle (3) from the reference load-speed spectrum (56)
if the at least one frequency value of the load-speed spectrum (55) deviates from a tolerance range of the at least one reference frequency value of the reference load-speed spectrum (56); or
if the frequency centroid of the at least one frequency value of the load-speed spectrum (55) deviates from a tolerance range of the reference centroid of the at least one reference frequency value of the reference load-speed spectrum (56); and
to detect a double critical deviation of the load-speed spectrum (55) of the first vehicle (3) from the reference load-speed spectrum (56)
if the at least one frequency value of the load-speed spectrum (55) deviates from a tolerance range of the at least one reference frequency value of the reference load-speed spectrum (56); and
if the frequency centroid of the at least one frequency value of the load-speed spectrum (55) deviates from a tolerance range of the reference centroid of the at least one reference frequency value of the reference load-speed spectrum (56).

6. The system (1) of any one of claims 1 to 5, wherein the control unit (11a, 11b) is configured
to determine a load-speed spectrum (55) of the first vehicle (3) comprising
a first frequency value (51) representing an operation time of the first vehicle (3) for high speed operation (f6, f7, f8); and
a second frequency value (47) representing an operation time of the first vehicle (3) for high load operation (f4);
to determine a reference load-speed spectrum (56) of the first vehicle (3) comprising
a first reference frequency value (59) in respect of high speed operation (f6, f7, f8);
and
a second reference frequency value (57) in respect of high load operation (f4); and to determine whether the at least one deviation of the load-speed spectrum (55) of the first
vehicle (3) from the reference load-speed spectrum (56) is
a deviation in respect of high speed operation (f6, f7, f8) resulting from a deviation from the tolerance range of the first reference frequency value (59) in respect of high speed operation (f6, f7, f8); or
a deviation in respect of high load operation (f4) resulting from a deviation from the tolerance range of the second reference frequency value (57) in respect of high load operation (f4);
or both.

7. The system (1) of any one of claims 1 to 6, when referring back to claim 5, wherein the control unit (11a, 11b) is configured
to determine whether the critical deviation of the load-speed spectrum (55) of the first vehicle (3) from the reference load-speed spectrum (56) is
a single or double critical deviation in respect of high speed operation (f6, f7, f8); or
a single or double critical deviation in respect of high load operation (f4);
or both.

8. The system (1) of claim 7, wherein the measure for optimizing the lifetime of the first vehicle (3) in case of a critical deviation in respect of high speed operation (f8) or high load operation (f4) is a measure
to warn an operator of the first vehicle (3) to exchange the first vehicle (3) by another vehicle,
to use another implement in combination with the first vehicle (3),
to use the first vehicle (3) for another task, or
to schedule a service inspection for maintenance.

9. The system (1) of any one of claims 6 to 8, wherein the at least one speed value of the first frequency value (51) representing an operation time of the first vehicle (3) for high speed operation (f8) is at least greater than 90% of an authorized top speed (v₄) of the first vehicle (3).

10. The system (1) of any one of claims 6 to 9, wherein the at least one load value of the second frequency value (47) representing an operation time of the first vehicle (3) for high load operation (f4) is at least greater than 65% of a maximum allowed permanent load (p₄) of the first vehicle (3).

11. The system (1) of any one of claims 6 to 10, wherein the measure for optimizing the lifetime of the first vehicle (3) is a measure
to increase the first frequency value (51) of the load-speed spectrum (55) representing an operation time of the first vehicle (3) for high speed operation (f6, f7, f8) if
the at least one deviation of the load-speed spectrum (55) of the first vehicle (3) from the reference load-speed spectrum (56) is
a double critical deviation in respect of high load operation (f4) and
an uncritical deviation in respect of high speed operation (f6, f7, f8);
and / or
to increase the second frequency value (47) of the load-speed spectrum (55) representing an operation time of the first vehicle (3) for high load operation (f4) if
the at least one deviation of the load-speed spectrum (55) of the first vehicle (3) from the reference load-speed spectrum (56) is
a double critical deviation in respect of high speed operation (f6, f7, f8) and
an uncritical deviation in respect of high load operation (f4).

12. The system (1) of claim 11, wherein
the measure to increase the first frequency value (51) of the load-speed spectrum (55) representing high speed operation (f6, f7, f8) is a measure to increase on-road transport operations of the first vehicle (3); and
the measure to increase the second frequency value (47) of the load-speed spectrum (55) representing high load operation (f4) is a measure to increase off-road pulling operations of the first vehicle (3).

13. The system (1) of any one of the preceding claims, wherein the reference load-speed spectrum (56) of the first vehicle (3) is based on a load-speed spectrum (69) of an additional vehicle (4, 5, 6).

14. The system (1) of any one of the preceding claims, comprising at least one additional vehicle (4, 5, 6) each having a component being of the same type as the first component of the first vehicle (3); wherein the control unit (11a, 11b) is configured
to determine a load-speed spectrum (69) of the at least one additional vehicle (4, 5, 6) comprising at least one frequency value representing an operating time of the at least one additional vehicle (4, 5, 6) in respect of at least one load value and at least one speed value;
to determine a reference load-speed spectrum for the at least one additional vehicle (4, 5, 6) comprising at least one reference frequency value;
to compare the load-speed spectrum (69) of the at least one additional vehicle (4, 5, 6) with the reference load-speed spectrum for the at least one additional vehicle (4, 5, 6); and
to detect at least one deviation of the load-speed spectrum (69) of the at least one additional vehicle (4, 5, 6) from the reference load-speed spectrum of the at least one additional vehicle (4, 5, 6).

15. The system (1) of claim 14, when referring back to claim 7, wherein the control unit (11a, 11b) is configured to determine whether the at least one deviation of the load-speed spectrum (69) of the at least one additional vehicle (4, 5, 6) from the reference load-speed spectrum for the at least one additional vehicle (4, 5, 6) is contrary to the at least one deviation of the load-speed spectrum (55) of the first vehicle (3) from the reference load-speed spectrum (56) for the first vehicle (3);
wherein a deviation of one load-speed spectrum is contrary to a deviation of another load-speed spectrum
if a determined deviation of the one load-speed spectrum was determined as a single or double critical deviation; and
if a corresponding deviation of the another load-speed spectrum was determined as an uncritical deviation; and
wherein the measure for optimizing the lifetime of the first vehicle (3) is a measure to warn an operator of the first vehicle (3) to exchange the first vehicle (3) by the at least one additional vehicle (4, 5, 6) for which the at least one deviation of the load-speed spectrum (69) from the reference load-speed spectrum being contrary to the at least one deviation of the load-speed spectrum (55) of the first vehicle (3) from the reference load-speed spectrum (56) for the first vehicle (3) was detected.

16. The system (1) of claim 15, wherein the control unit (11a, 11b) is configured to determine for the at least one additional vehicle (4, 5, 6) whether the at least one deviation of the load-speed spectrum (69) of the at least one additional vehicle (4, 5, 6) from the reference load-speed spectrum for the at least one additional vehicle (4, 5, 6) is a deviation in respect of high speed operation (f6, f7, f8); or
a deviation in respect of high load operation (f4);
wherein a deviation of one load-speed spectrum is contrary to a deviation of another load-speed spectrum
if both, the at least one deviation of the load-speed spectrum (55) of the first vehicle (3) and the at least one deviation of the load-speed spectrum (69) of the at least one additional vehicle (4, 5, 6) are a deviation in respect of high speed operation (f6, f7, f8); or
if both, the at least one deviation of the load-speed spectrum (55) of the first vehicle (3) and the at least one deviation of the load-speed spectrum (69) of the at least one additional vehicle (4, 5, 6) are a deviation in respect of high load operation (f4).

17. The system (1) of claim 15 or 16, wherein the control unit (11a, 11b) is configured
to determine a number of the deviations of the load-speed spectrum (69) of the at least one additional vehicle (4, 5, 6) from the reference load-speed spectrum for the at least one additional vehicle (4, 5, 6) being contrary to the at least one deviation of the load-speed spectrum (55) of the first vehicle (3) from the reference load-speed spectrum (56) for the first vehicle (3) and
to determine a degree of the deviation for each deviation of the load-speed spectrum (69) of the at least one additional vehicle (4, 5, 6) from the reference load-speed spectrum for the at least one additional vehicle (4, 5, 6) being contrary to the at least one deviation of the load-speed spectrum (55) of the first vehicle (3) from the reference load-speed spectrum (56) for the first vehicle (3);
wherein the measure for optimizing the lifetime of the first vehicle (3) is a measure to warn an operator of the first vehicle (3) to exchange the first vehicle (3) by the at least one additional vehicle (4, 5, 6) for which the greatest number of the deviations or the greatest degree of the deviation was determined.

18. The system (1) of any one of claims 14 to 17, wherein the reference load-speed spectrum (56) for the first vehicle (3) and the reference load-speed spectrum for the at least one additional vehicle (4, 5, 6) are the same.

19. The system (1) of any one of claims 14 to 18, wherein the control unit (11a, 11b) is configured to determine the types of the first vehicle (3) and the least one additional vehicle (4, 5, 6); and
to exclude any additional vehicle (4, 5, 6) of a type different than the type of the first vehicle (3) from determining of the measure for optimizing the lifetime of the first vehicle (3).

20. The system (1) of any one of the preceding claims, wherein the control unit (11a, 11b) is configured to determine different reference load-speed spectrums in dependence of the season.

21. The system (1) of any one of the preceding claims, wherein the control unit (11a, 11b) is configured to determine different reference load-speed spectrums in dependence of the geographical position of the first vehicle (3).

22. The system (1) of any one of the preceding claims, wherein the control unit (11a) is integrated in the first vehicle (3).

## Patentansprüche

1. System (1) zum Optimieren der Lebensdauer eines Fahrzeugs, umfassend:
eine Steuereinheit (11a, 11b);
ein erstes Fahrzeug (3), umfassend:
eine erste Komponente;
einen Sensor (40) zum Bestimmen mindestens eines Lastwerts, der eine Last der ersten Komponente repräsentiert; und
einen Sensor (42) zum Bestimmen mindestens eines Geschwindigkeitswerts, der dem mindestens einen Lastwert entspricht und eine Fahrzeuggeschwindigkeit repräsentiert;
wobei die Steuereinheit (11a, 11b) dazu ausgelegt ist, ein Last-Geschwindigkeits-Spektrum (55) des ersten Fahrzeugs (3) zu bestimmen, wobei das Last-Geschwindigkeits-Spektrum (55) mindestens einen Frequenzwert umfasst, der eine Betriebszeit des ersten Fahrzeugs (3) in Bezug auf den mindestens einen Lastwert und den mindestens einen dem mindestens einen Lastwert entsprechenden Geschwindigkeitswert repräsentiert;
ein Referenz-Last-Geschwindigkeits-Spektrum (56) für das erste Fahrzeug (3) zu bestimmen, das mindestens einen Referenzfrequenzwert umfasst, der dem mindestens einen Frequenzwert des Last-Geschwindigkeits-Spektrums (55) entspricht;
das Last-Geschwindigkeits-Spektrum (55) des ersten Fahrzeugs (3) mit dem Referenz-Last-Geschwindigkeits-Spektrum (56) zu vergleichen;
mindestens eine Abweichung des Last-Geschwindigkeits-Spektrums (55) des ersten Fahrzeugs (3) vom Referenz-Last-Geschwindigkeits-Spektrum (56) zu erfassen; und
eine Maßnahme zum Optimieren der Lebensdauer des ersten Fahrzeugs (3) in Bezug auf die mindestens eine Abweichung zu bestimmen.

2. System (1) nach Anspruch 1, wobei die erste Komponente ein Getriebe ist und der mindestens eine Lastwert, der die Last der ersten Komponente repräsentiert, ein Druckwert des Getriebes ist.

3. System (1) nach Anspruch 2, wobei
das Getriebe ein Hydraulikgetriebe (14) umfasst; und der Druckwert des Hydraulikgetriebes (14) ein Druckwert einer Hydraulikleitung (26, 27) ist, die eine Hydraulikpumpe (28) und einen Hydraulikmotor (29, 30) des Hydraulikgetriebes (14) verbindet.

4. System (1) nach einem der Ansprüche 1 bis 3, wobei die Steuereinheit (11a, 11b) dazu ausgelegt ist,
einen Frequenzschwerpunkt des mindestens einen Frequenzwerts des Last-Geschwindigkeits-Spektrums (55) des ersten Fahrzeugs (3) auf Grundlage des arithmetischen Mittels aller Geschwindigkeitswerte und Lastwerte des mindestens einen Frequenzwerts zu bestimmen; und
einen Referenzschwerpunkt des mindestens einen Referenzfrequenzwerts des Referenz-Last-Geschwindigkeits-Spektrums (56) zu bestimmen.

5. System (1) nach einem der Ansprüche 1 bis 4, wobei die Steuereinheit (11a, 11b) dazu ausgelegt ist,
eine einfache kritische Abweichung des Last-Geschwindigkeits-Spektrums (55) des ersten Fahrzeugs (3) vom Referenz-Last-Geschwindigkeits-Spektrum (56) zu erfassen,
wenn der mindestens eine Frequenzwert des Last-Geschwindigkeits-Spektrums (55) von einem Toleranzbereich des mindestens einen Referenzfrequenzwerts des Referenz-Last-Geschwindigkeits-Spektrums (56) abweicht; oder
wenn der Frequenzschwerpunkt des mindestens einen Frequenzwerts des Last-Geschwindigkeits-Spektrums (55) von einem Toleranzbereich des Referenzschwerpunkts des mindestens einen Referenzfrequenzwerts des Referenz-Last-Geschwindigkeits-Spektrums (56) abweicht; und
eine doppelte kritische Abweichung des Last-Geschwindigkeits-Spektrums (55) des ersten Fahrzeugs (3) vom Referenz-Last-Geschwindigkeits-Spektrum (56) zu erfassen,
wenn der mindestens eine Frequenzwert des Last-Geschwindigkeits-Spektrums (55) von einem Toleranzbereich des mindestens einen Referenzfrequenzwerts des Referenz-Last-Geschwindigkeits-Spektrums (56) abweicht; und
wenn der Frequenzschwerpunkt des mindestens einen Frequenzwerts des Last-Geschwindigkeits-Spektrums (55) von einem Toleranzbereich des Referenzschwerpunkts des mindestens einen Referenzfrequenzwerts des Referenz-Last-Geschwindigkeits-Spektrums (56) abweicht.

6. System (1) nach einem der Ansprüche 1 bis 5, wobei die Steuereinheit (11a, 11b) dazu ausgelegt ist,
ein Last-Geschwindigkeits-Spektrum (55) des ersten Fahrzeugs (3) zu bestimmen, das Folgendes umfasst:
einen ersten Frequenzwert (51), der eine Betriebszeit des ersten Fahrzeugs (3) für einen Hochgeschwindigkeitsbetrieb (f6, f7, f8) repräsentiert; und
einen zweiten Frequenzwert (47), der eine Betriebszeit des ersten Fahrzeugs (3) für einen Hochlastbetrieb (f4) repräsentiert;
ein Referenz-Last-Geschwindigkeits-Spektrum (56) des ersten Fahrzeugs (3) zu bestimmen, das Folgendes umfasst:
einen ersten Referenzfrequenzwert (59) in Bezug auf den Hochgeschwindigkeitsbetrieb (f6, f7, f8); und
einen zweiten Referenzfrequenzwert (57) in Bezug auf den Hochlastbetrieb (f4); und
zu bestimmen, ob die mindestens eine Abweichung des Last-Geschwindigkeits-Spektrums (55) des ersten Fahrzeugs (3) vom Referenz-Last-Geschwindigkeits-Spektrum (56) Folgendes ist:
eine Abweichung in Bezug auf den Hochgeschwindigkeitsbetrieb (f6, f7, f8), die sich aus einer Abweichung vom Toleranzbereich des ersten Referenzfrequenzwerts (59) in Bezug auf den Hochgeschwindigkeitsbetrieb (f6, f7, f8) ergibt; oder eine Abweichung in Bezug auf den Hochlastbetrieb (f4), die sich aus einer Abweichung vom Toleranzbereich des zweiten Referenzfrequenzwerts (57) in Bezug auf den Hochlastbetrieb (f4) ergibt;
oder beides.

7. System (1) nach einem der Ansprüche 1 bis 6 bei Rückbezug auf Anspruch 5, wobei die Steuereinheit (11a, 11b) dazu ausgelegt ist,
zu bestimmen, ob die kritische Abweichung des Last-Geschwindigkeits-Spektrums (55) des ersten Fahrzeugs (3) vom Referenz-Last-Geschwindigkeits-Spektrum (56) Folgendes ist:
eine einfache oder doppelte kritische Abweichung in Bezug auf den Hochgeschwindigkeitsbetrieb (f6, f7, f8); oder
eine einfache oder doppelte kritische Abweichung in Bezug auf den Hochlastbetrieb (f4); oder beides.

8. System (1) nach Anspruch 7, wobei die Maßnahme zum Optimieren der Lebensdauer des ersten Fahrzeugs (3) im Fall einer kritischen Abweichung in Bezug auf den Hochgeschwindigkeitsbetrieb (f8) oder den Hochlastbetrieb (f4) eine Maßnahme ist,
einen Bediener des ersten Fahrzeugs (3) zu warnen, das erste Fahrzeug (3) durch ein anderes Fahrzeug zu ersetzen,
ein anderes Arbeitsgerät in Kombination mit dem ersten Fahrzeug (3) zu verwenden,
das erste Fahrzeug (3) für eine andere Aufgabe zu verwenden oder
eine Wartungsinspektion einzuplanen.

9. System (1) nach einem der Ansprüche 6 bis 8, wobei der mindestens eine Geschwindigkeitswert des ersten Frequenzwerts (51), der eine Betriebszeit des ersten Fahrzeugs (3) für einen Hochgeschwindigkeitsbetrieb (f8) repräsentiert, mindestens größer als 90 % einer zulässigen Höchstgeschwindigkeit (v4) des ersten Fahrzeugs (3) ist.

10. System (1) nach einem der Ansprüche 6 bis 9, wobei der mindestens eine Lastwert des zweiten Frequenzwerts (47), der eine Betriebszeit des ersten Fahrzeugs (3) für einen Hochlastbetrieb (f4) repräsentiert, mindestens größer als 65 % einer maximal zulässigen Dauerlast (p₄) des ersten Fahrzeugs (3) ist.

11. System (1) nach einem der Ansprüche 6 bis 10, wobei die Maßnahme zum Optimieren der Lebensdauer des ersten Fahrzeugs (3) eine Maßnahme ist,
den ersten Frequenzwert (51) des Last-Geschwindigkeits-Spektrums (55), der eine Betriebszeit des ersten Fahrzeugs (3) für einen Hochgeschwindigkeitsbetrieb (f6, f7, f8) repräsentiert, zu erhöhen, wenn
die mindestens eine Abweichung des Last-Geschwindigkeits-Spektrums (55) des ersten Fahrzeugs (3) vom Referenz-Last-Geschwindigkeits-Spektrum (56) Folgendes ist:
eine doppelte kritische Abweichung in Bezug auf den Hochlastbetrieb (f4) und
eine unkritische Abweichung in Bezug auf den Hochgeschwindigkeitsbetrieb (f6, f7, f8);
und/oder
den zweiten Frequenzwert (47) des Last-Geschwindigkeits-Spektrums (55), der eine Betriebszeit des ersten Fahrzeugs (3) für einen Hochlastbetrieb (f4) repräsentiert, zu erhöhen, wenn
die mindestens eine Abweichung des Last-Geschwindigkeits-Spektrums (55) des ersten Fahrzeugs (3) vom Referenz-Last-Geschwindigkeits-Spektrum (56) Folgendes ist:
eine doppelte kritische Abweichung in Bezug auf den Hochgeschwindigkeitsbetrieb (f6, f7, f8) und
eine unkritische Abweichung in Bezug auf den Hochlastbetrieb (f4).

12. System (1) nach Anspruch 11, wobei
die Maßnahme zum Erhöhen des ersten Frequenzwerts (51) des Last-Geschwindigkeits-Spektrums (55), der einen Hochgeschwindigkeitsbetrieb (f6, f7, f8) repräsentiert, eine Maßnahme zum Erhöhen von Straßentransportvorgängen des ersten Fahrzeugs (3) ist; und
die Maßnahme zum Erhöhen des zweiten Frequenzwerts (47) des Last-Geschwindigkeits-Spektrums (55), der einen Hochlastbetrieb (f4) repräsentiert, eine Maßnahme zum Erhöhen von Zugarbeiten des ersten Fahrzeugs (3) im Gelände ist.

13. System (1) nach einem der vorhergehenden Ansprüche, wobei das Referenz-Last-Geschwindigkeits-Spektrum (56) des ersten Fahrzeugs (3) auf einem Last-Geschwindigkeits-Spektrum (69) eines zusätzlichen Fahrzeugs (4, 5, 6) basiert.

14. System (1) nach einem der vorhergehenden Ansprüche, umfassend mindestens ein zusätzliches Fahrzeug (4, 5, 6), wobei jedes zusätzliche Fahrzeug eine Komponente aufweist, die vom gleichen Typ wie die erste Komponente des ersten Fahrzeugs (3) ist; wobei die Steuereinheit (11a, 11b) dazu ausgelegt ist, ein Last-Geschwindigkeits-Spektrum (69) des mindestens einen zusätzlichen Fahrzeugs (4, 5, 6) zu bestimmen, das mindestens einen Frequenzwert umfasst, der eine Betriebszeit des mindestens einen zusätzlichen Fahrzeugs (4, 5, 6) in Bezug auf mindestens einen Lastwert und mindestens einen Geschwindigkeitswert repräsentiert;
ein Referenz-Last-Geschwindigkeits-Spektrum für das mindestens eine zusätzliche Fahrzeug (4, 5, 6) zu bestimmen, das mindestens einen Referenzfrequenzwert umfasst;
das Last-Geschwindigkeits-Spektrum (69) des mindestens einen zusätzlichen Fahrzeugs (4, 5, 6) mit dem Referenz-Last-Geschwindigkeits-Spektrum für das mindestens eine zusätzliche Fahrzeug (4, 5, 6) zu vergleichen; und mindestens eine Abweichung des Last-Geschwindigkeits-Spektrums (69) des mindestens einen zusätzlichen Fahrzeugs (4, 5, 6) vom Referenz-Last-Geschwindigkeits-Spektrum des mindestens einen zusätzlichen Fahrzeugs (4, 5, 6) zu erfassen.

15. System (1) nach Anspruch 14 bei Rückbezug auf Anspruch 7, wobei die Steuereinheit (11a, 11b) dazu ausgelegt ist, zu bestimmen, ob die mindestens eine Abweichung des Last-Geschwindigkeits-Spektrums (69) des mindestens einen zusätzlichen Fahrzeugs (4, 5, 6) vom Referenz-Last-Geschwindigkeits-Spektrum für das mindestens eine zusätzliche Fahrzeug (4, 5, 6) der mindestens einen Abweichung des Last-Geschwindigkeits-Spektrums (55) des ersten Fahrzeugs (3) vom Referenz-Last-Geschwindigkeits-Spektrum (56) für das erste Fahrzeug (3) entgegengesetzt ist;
wobei eine Abweichung eines Last-Geschwindigkeits-Spektrums einer Abweichung eines anderen Last-Geschwindigkeits-Spektrums entgegengesetzt ist,
wenn eine ermittelte Abweichung des einen Last-Geschwindigkeits-Spektrums als einfache oder doppelte kritische Abweichung ermittelt wurde; und
wenn eine entsprechende Abweichung des anderen Last-Geschwindigkeits-Spektrums als unkritische Abweichung ermittelt wurde; und
wobei die Maßnahme zum Optimieren der Lebensdauer des ersten Fahrzeugs (3) darin besteht, einen Bediener des ersten Fahrzeugs (3) zu warnen, das erste Fahrzeug (3) durch das mindestens eine zusätzliche Fahrzeug (4, 5, 6) zu ersetzen, für das erfasst wurde, dass die mindestens eine Abweichung des Last-Geschwindigkeits-Spektrums (69) vom Referenz-Last-Geschwindigkeits-Spektrum der mindestens einen Abweichung des Last-Geschwindigkeits-Spektrums (55) des ersten Fahrzeugs (3) vom Referenz-Last-Geschwindigkeits-Spektrum (56) für das erste Fahrzeug (3) entgegengesetzt ist.

16. System (1) nach Anspruch 15, wobei die Steuereinheit (11a, 11b) dazu ausgelegt ist, für das mindestens eine zusätzliche Fahrzeug (4, 5, 6) zu bestimmen, ob die mindestens eine Abweichung des Last-Geschwindigkeits-Spektrums (69) des mindestens einen zusätzlichen Fahrzeugs (4, 5, 6) vom Referenz-Last-Geschwindigkeits-Spektrum für das mindestens eine zusätzliche Fahrzeug (4, 5, 6) Folgendes ist:
eine Abweichung in Bezug auf den Hochgeschwindigkeitsbetrieb (f6, f7, f8); oder
eine Abweichung in Bezug auf den Hochlastbetrieb (f4);
wobei eine Abweichung eines Last-Geschwindigkeits-Spektrums einer Abweichung eines anderen Last-Geschwindigkeits-Spektrums entgegengesetzt ist,
wenn die mindestens eine Abweichung des Last-Geschwindigkeits-Spektrums (55) des ersten Fahrzeugs (3) und die mindestens eine Abweichung des Last-Geschwindigkeits-Spektrums (69) des mindestens einen zusätzlichen Fahrzeugs (4, 5, 6) beide Abweichungen in Bezug auf den Hochgeschwindigkeitsbetrieb (f6, f7, f8) sind; oder
wenn die mindestens eine Abweichung des Last-Geschwindigkeits-Spektrums (55) des ersten Fahrzeugs (3) und die mindestens eine Abweichung des Last-Geschwindigkeits-Spektrums (69) des mindestens einen zusätzlichen Fahrzeugs (4, 5, 6) beide Abweichungen in Bezug auf den Hochlastbetrieb (f4) sind.

17. System (1) nach Anspruch 15 oder 16, wobei die Steuereinheit (11a, 11b) dazu ausgelegt ist,
eine Anzahl der Abweichungen des Last-Geschwindigkeits-Spektrums (69) des mindestens einen zusätzlichen Fahrzeugs (4, 5, 6) vom Referenz-Last-Geschwindigkeits-Spektrum für das mindestens eine zusätzliche Fahrzeug (4, 5, 6) zu bestimmen, die der mindestens einen Abweichung des Last-Geschwindigkeits-Spektrums (55) des ersten Fahrzeugs (3) vom Referenz-Last-Geschwindigkeits-Spektrum (56) für das erste Fahrzeug (3) entgegengesetzt sind, und
einen Grad der Abweichung für jede Abweichung des Last-Geschwindigkeits-Spektrums (69) des mindestens einen zusätzlichen Fahrzeugs (4, 5, 6) vom Referenz-Last-Geschwindigkeits-Spektrum für das mindestens eine zusätzliche Fahrzeug (4, 5, 6) zu bestimmen, wobei die jeweilige Abweichung der mindestens einen Abweichung des Last-Geschwindigkeits-Spektrums (55) des ersten Fahrzeugs (3) vom Referenz-Last-Geschwindigkeits-Spektrum (56) für das erste Fahrzeug (3) entgegengesetzt ist;
wobei die Maßnahme zum Optimieren der Lebensdauer des ersten Fahrzeugs (3) darin besteht, einen Bediener des ersten Fahrzeugs (3) zu warnen, das erste Fahrzeug (3) durch das mindestens eine zusätzliche Fahrzeug (4, 5, 6) zu ersetzen, für das die größte Anzahl der Abweichungen oder der größte Grad der Abweichung bestimmt wurde.

18. System (1) nach einem der Ansprüche 14 bis 17, wobei das Referenz-Last-Geschwindigkeits-Spektrum (56) für das erste Fahrzeug (3) und das Referenz-Last-Geschwindigkeits-Spektrum für das mindestens eine zusätzliche Fahrzeug (4, 5, 6) gleich sind.

19. System (1) nach einem der Ansprüche 14 bis 18, wobei die Steuereinheit (11a, 11b) dazu ausgelegt ist, die Typen des ersten Fahrzeugs (3) und des mindestens einen zusätzlichen Fahrzeugs (4, 5, 6) zu bestimmen; und jedes zusätzliche Fahrzeug (4, 5, 6) eines anderen Typs als des Typs des ersten Fahrzeugs (3) von der Bestimmung der Maßnahme zum Optimieren der Lebensdauer des ersten Fahrzeugs (3) auszuschließen.

20. System (1) nach einem der vorhergehenden Ansprüche, wobei die Steuereinheit (11a, 11b) dazu ausgelegt ist, unterschiedliche Referenz-Last-Geschwindigkeits-Spektren in Abhängigkeit von der Jahreszeit zu bestimmen.

21. System (1) nach einem der vorhergehenden Ansprüche, wobei die Steuereinheit (11a, 11b) dazu ausgelegt ist, unterschiedliche Referenz-Last-Geschwindigkeits-Spektren in Abhängigkeit von der geografischen Position des ersten Fahrzeugs (3) zu bestimmen.

22. System (1) nach einem der vorhergehenden Ansprüche, wobei die Steuereinheit (11a) in das erste Fahrzeug (3) integriert ist.

## Revendications

1. Système (1) d'optimisation de la durée de vie d'un véhicule, comprenant
une unité de commande (11a, 11b) ;
un premier véhicule (3) comprenant
un premier composant ;
un capteur (40) pour déterminer au moins une valeur de charge représentant une charge du premier composant ; et un capteur (42) pour déterminer au moins une valeur de vitesse correspondant à la ou aux valeurs de charge représentant une vitesse du véhicule ;
dans lequel l'unité de commande (11a, 11b) est configurée pour
déterminer un spectre charge-vitesse (55) du premier véhicule (3), le spectre charge-vitesse (55) comprenant au moins une valeur de fréquence représentant un temps de fonctionnement du premier véhicule (3) par rapport à la ou aux valeurs de charge et la ou les valeurs de vitesse correspondant à la ou aux valeurs de charge ; déterminer un spectre charge-vitesse de référence (56) pour le premier véhicule (3) comprenant au moins une valeur de fréquence de référence correspondant à la ou aux valeurs de fréquence du spectre charge-vitesse (55) ; comparer le spectre charge-vitesse (55) du premier véhicule (3) avec le spectre charge-vitesse (56) de référence ;
détecter au moins un écart entre le spectre charge-vitesse (55) du premier véhicule (3) et le spectre charge-vitesse de référence (56) ; et
déterminer une mesure d'optimisation de la durée de vie du premier véhicule (3) par rapport au ou aux écarts.

2. Système (1) selon la revendication 1, dans lequel le premier composant est une transmission et la ou les valeurs de charge représentant la charge du premier composant sont une valeur de pression de la transmission.

3. Système (1) selon la revendication 2, dans lequel la transmission comprend une transmission hydraulique (14) ; et
la valeur de pression de la transmission hydraulique (14) est une valeur de pression d'une conduite hydraulique (26, 27) reliant une pompe hydraulique (28) et un moteur hydraulique (29, 30) de la transmission hydraulique (14).

4. Système (1) selon l'une quelconque des revendications 1 à 3, dans lequel l'unité de commande (11a, 11b) est configurée pour
déterminer un centroïde de fréquence de la ou des valeurs de fréquence du spectre charge-vitesse (55) du premier véhicule (3) sur la base de la moyenne arithmétique de toutes les valeurs de vitesse et valeurs de charge de la ou des valeurs de fréquence ; et
déterminer un centroïde de référence de la ou des valeurs de fréquence de référence du spectre charge-vitesse de référence (56).

5. Système (1) selon l'une quelconque des revendications 1 à 4, dans lequel l'unité de commande (11a, 11b) est configurée pour
détecter un écart critique simple entre le spectre charge-vitesse (55) du premier véhicule (3) et le spectre charge-vitesse de référence (56)
si la ou les valeurs de fréquence du spectre charge-vitesse (55) s'écartent d'une plage de tolérance de la ou des valeurs de fréquence de référence du spectre charge-vitesse de référence (56) ; ou
si le centroïde de fréquence de la ou des valeurs de fréquence du spectre charge-vitesse (55) s'écarte d'une plage de tolérance du centroïde de référence de la ou des valeurs de fréquence de référence du spectre charge-vitesse de référence (56) ; et
détecter un double écart critique entre le spectre charge-vitesse (55) du premier véhicule (3) et le spectre charge-vitesse de référence (56)
si la ou les valeurs de fréquence du spectre charge-vitesse (55) s'écartent d'une plage de tolérance de la ou des valeurs de fréquence de référence du spectre charge-vitesse de référence (56) ; et
si le centroïde de fréquence de la ou des valeurs de fréquence du spectre charge-vitesse (55) s'écarte d'une plage de tolérance du centroïde de référence de la ou des valeurs de fréquence de référence du spectre charge-vitesse de référence (56).

6. Système (1) selon l'une quelconque des revendications 1 à 5, dans lequel l'unité de commande (11a, 11b) est configurée pour
déterminer un spectre charge-vitesse (55) du premier véhicule (3) comprenant
une première valeur de fréquence (51) représentant un temps de fonctionnement du premier véhicule (3) pour un fonctionnement à haute vitesse (f6, f7, f8) ; et
une seconde valeur de fréquence (47) représentant un temps de fonctionnement du premier véhicule (3) pour un fonctionnement en charge élevée (f4) ;
déterminer un spectre charge-vitesse de référence (56) du premier véhicule (3) comprenant
une première valeur de fréquence de référence (59) pour un fonctionnement à haute vitesse (f6, f7, f8) ; et
une seconde valeur de fréquence de référence (57) pour un fonctionnement en charge élevée (f4) ; et
déterminer si le ou les écarts entre le spectre charge-vitesse (55) du premier véhicule (3) et le spectre charge-vitesse de référence (56) est
un écart par rapport au fonctionnement à haute vitesse (f6, f7, f8) résultant d'un écart par rapport à la plage de tolérance de la première valeur de fréquence de référence (59) en ce qui concerne le fonctionnement à haute vitesse (f6, f7, f8) ; ou
un écart par rapport au fonctionnement en charge élevée (f4) résultant d'un écart par rapport à la plage de tolérance de la seconde valeur de fréquence de référence (57) en ce qui concerne le fonctionnement en charge élevée (f4) ;
ou les deux.

7. Système (1) selon l'une quelconque des revendications 1 à 6, lorsqu'on se réfère de nouveau à la revendication 5, dans lequel l'unité de commande (11a, 11b) est configurée pour
déterminer si l'écart critique entre le spectre charge-vitesse (55) du premier véhicule (3) et le spectre charge-vitesse de référence (56) est
un écart critique simple ou double en ce qui concerne le fonctionnement à haute vitesse (f6, f7, f8) ; ou
un écart critique simple ou double en ce qui concerne le fonctionnement en charge élevée (f4) ; ou les deux.

8. Système (1) selon la revendication 7, dans lequel la mesure d'optimisation de la durée de vie du premier véhicule (3) en cas d'écart critique en ce qui concerne un fonctionnement à haute vitesse (f8) ou un fonctionnement en charge élevée (f4) est une mesure pour avertir un opérateur du premier véhicule (3) d'échanger le premier véhicule (3) avec un autre véhicule,
pour utiliser un autre instrument en combinaison avec le premier véhicule (3),
pour utiliser le premier véhicule (3) pour une autre tâche, ou
pour planifier une inspection d'entretien.

9. Système (1) selon l'une quelconque des revendications 6 à 8, dans lequel la ou les valeurs de vitesse de la première valeur de fréquence (51) représentant un temps de fonctionnement du premier véhicule (3) pour un fonctionnement à haute vitesse (f8) est au moins supérieure à 90 % d'une vitesse maximale autorisée (v₄) du premier véhicule (3).

10. Système (1) selon l'une quelconque des revendications 6 à 9, dans lequel ou les valeurs de charge de la seconde valeur de fréquence (47) représentant un temps de fonctionnement du premier véhicule (3) pour un fonctionnement en charge élevée (f4) est au moins supérieure à 65 % d'une charge permanente maximale autorisée (p₄) du premier véhicule (3).

11. Système (1) selon l'une quelconque des revendications 6 à 10, dans lequel la mesure d'optimisation de la durée de vie du premier véhicule (3) est une mesure
pour augmenter la première valeur de fréquence (51) du spectre charge-vitesse (55) représentant un temps de fonctionnement du premier véhicule (3) pour un fonctionnement à haute vitesse (f6, f7, f8) si le ou les écarts entre le spectre charge-vitesse (55) du premier véhicule (3) et le spectre charge-vitesse de référence (56) sont
un double écart critique en ce qui concerne le fonctionnement en charge élevée (f4) et
un écart non critique en ce qui concerne le fonctionnement à haute vitesse (f6, f7, f8) ;
et/ou
pour augmenter la seconde valeur de fréquence (47) du spectre charge-vitesse (55) représentant un temps de fonctionnement du premier véhicule (3) pour un fonctionnement en charge élevée (f4) si
le ou les écarts entre le spectre charge-vitesse (55) du premier véhicule (3) et le spectre charge-vitesse de référence (56) sont
un double écart critique en ce qui concerne le fonctionnement à haute vitesse (f6, f7, f8) et
un écart non critique en ce qui concerne le fonctionnement en charge élevée (f4).

12. Système (1) selon la revendication 11, dans lequel la mesure d'augmentation de la première valeur de fréquence (51) du spectre charge-vitesse (55) représentant un fonctionnement à haute vitesse (f6, f7, f8) est une mesure d'augmentation des opérations de transport sur route du premier véhicule (3) ; et
la mesure d'augmentation de la seconde valeur de fréquence (47) du spectre charge-vitesse (55) représentant un fonctionnement en charge élevée (f4) est une mesure d'augmentation des opérations de traction hors route du premier véhicule (3).

13. Système (1) selon l'une quelconque des revendications précédentes, dans lequel le spectre charge-vitesse de référence (56) du premier véhicule (3) est basé sur un spectre charge-vitesse (69) d'un véhicule supplémentaire (4, 5, 6).

14. Système (1) selon l'une quelconque des revendications précédentes, comprenant au moins un véhicule supplémentaire (4, 5, 6) ayant chacun un composant du même type que le premier composant du premier véhicule (3) ; dans lequel l'unité de commande (11a, 11b) est configurée pour déterminer un spectre charge-vitesse (69) du ou des véhicules supplémentaires (4, 5, 6) comprenant au moins une valeur de fréquence représentant un temps de fonctionnement du ou des véhicules supplémentaires (4, 5, 6) en ce qui concerne au moins une valeur de charge et au moins une valeur de vitesse ;
pour déterminer un spectre charge-vitesse de référence pour le ou les véhicules supplémentaires (4, 5, 6) comprenant au moins une valeur de fréquence de référence ;
pour comparer le spectre charge-vitesse (69) du ou des véhicules supplémentaires (4, 5, 6) avec le spectre charge-vitesse de référence du ou des véhicules supplémentaires (4, 5, 6) ; et
pour détecter au moins un écart entre le spectre charge-vitesse (69) du ou des véhicules supplémentaires (4, 5, 6) et le spectre charge-vitesse de référence du ou des véhicules supplémentaires (4, 5, 6).

15. Système (1) selon la revendication 14, lorsqu'on se réfère de nouveau à la revendication 7, dans lequel l'unité de commande (11a, 11b) est configurée pour déterminer si le ou les écarts entre le spectre charge-vitesse (69) du ou des véhicules supplémentaires (4, 5, 6) et le spectre charge-vitesse de référence pour le ou les véhicules supplémentaires (4, 5, 6) sont contraires au ou aux écarts entre le spectre charge-vitesse (55) du premier véhicule (3) et le spectre charge-vitesse de référence (56) du premier véhicule (3) ;
dans lequel un écart d'un spectre charge-vitesse est contraire à un écart d'un autre spectre charge-vitesse si un écart déterminé du spectre charge-vitesse a été déterminé comme un écart critique simple ou double ; et si un écart correspondant de l'autre spectre charge-vitesse a été déterminé comme un écart non critique ; et dans lequel la mesure d'optimisation de la durée de vie du premier véhicule (3) est une mesure d'avertissement d'un opérateur du premier véhicule (3) pour échanger le premier véhicule (3) avec le ou les véhicules supplémentaires (4, 5, 6) pour lesquels il a été détecté que le ou les écarts entre le spectre charge-vitesse (69) et le spectre charge-vitesse de référence sont contraires au ou aux écarts entre le spectre charge-vitesse (55) du premier véhicule (3) et le spectre charge-vitesse de référence (56) pour le premier véhicule (3).

16. Système (1) selon la revendication 15, dans lequel l'unité de commande (11a, 11b) est configurée pour déterminer, pour le ou les véhicules supplémentaires (4, 5, 6), si le ou les écarts entre le spectre charge-vitesse (69) du ou des véhicules supplémentaires (4, 5, 6) et le spectre charge-vitesse de référence pour le ou les véhicules supplémentaires (4, 5, 6) est
un écart en ce qui concerne le fonctionnement à haute vitesse (f6, f7, f8) ; ou
un écart en ce qui concerne le fonctionnement en charge élevée (f4) ;
dans lequel un écart d'un spectre charge-vitesse est contraire à un écart d'un autre spectre charge-vitesse si à la fois le ou les écarts du spectre charge-vitesse (55) du premier véhicule (3) et le ou les écarts du spectre charge-vitesse (69) du ou des véhicules supplémentaires (4, 5, 6) sont un écart en ce qui concerne le fonctionnement à haute vitesse (f6, f7, f8) ; ou
si à la fois le ou les écarts du spectre charge-vitesse (55) du premier véhicule (3) et le ou les écarts du spectre charge-vitesse (69) du ou des véhicules supplémentaires (4, 5, 6) sont un écart en ce qui concerne le fonctionnement en charge élevée (f4).

17. Système (1) selon la revendication 15 ou 16, dans lequel l'unité de commande (11a, 11b) est configurée pour déterminer un nombre d'écarts entre le spectre charge-vitesse (69) du ou des véhicules supplémentaires (4, 5, 6) et le spectre charge-vitesse de référence pour le ou les véhicules supplémentaires (4, 5, 6) contraires au ou aux écarts entre le spectre charge-vitesse (55) du premier véhicule (3) et le spectre charge-vitesse de référence (56) du premier véhicule (3) ; et
déterminer un degré de l'écart pour chaque écart entre le spectre charge-vitesse (69) du ou des véhicules supplémentaires (4, 5, 6) et le spectre charge-vitesse de référence pour le ou les véhicules supplémentaires (4, 5, 6) contraire au ou aux écarts entre le spectre charge-vitesse (55) du premier véhicule (3) et le spectre charge-vitesse de référence (56) du premier véhicule (3) ;
dans lequel la mesure d'optimisation de la durée de vie du premier véhicule (3) est une mesure d'avertissement d'un opérateur du premier véhicule (3) pour échanger le premier véhicule (3) avec le ou les véhicules supplémentaires (4, 5, 6) pour lequel le plus grand nombre d'écarts ou le plus grand degré de l'écart ont été déterminés.

18. Système (1) selon l'une quelconque des revendications 14 à 17, dans lequel le spectre charge-vitesse de référence (56) pour le premier véhicule (3) et le spectre charge-vitesse de référence pour le ou les véhicules supplémentaires (4, 5, 6) sont les mêmes.

19. Système (1) selon l'une quelconque des revendications 14 à 18, dans lequel l'unité de commande (11a, 11b) est configurée pour déterminer les types du premier véhicule (3) et du ou des véhicules supplémentaires (4, 5, 6) ; et
exclure tout véhicule supplémentaire (4, 5, 6) d'un type différent du type du premier véhicule (3) de la détermination de la mesure d'optimisation de la durée de vie du premier véhicule (3).

20. Système (1) selon l'une quelconque des revendications précédentes, dans lequel l'unité de commande (11a, 11b) est configurée pour déterminer différents spectres charge-vitesse de référence en fonction de la saison.

21. Système (1) selon l'une quelconque des revendications précédentes, dans lequel l'unité de commande (11a, 11b) est configurée pour déterminer différents spectres charge-vitesse de référence en fonction de la position géographique du premier véhicule (3).

22. Système (1) selon l'une quelconque des revendications précédentes, dans lequel l'unité de commande (11a) est intégrée dans le premier véhicule (3).
